(19) Europäisches Patentamt
European Patent Office
Office européen des brevets

(11) Veröffentlichungsnummer: **0 425 435 A1**

# (12) EUROPÄISCHE PATENTANMELDUNG

(21) Anmeldenummer: **90810790.7**

(22) Anmeldetag: **16.10.90**

(51) Int. Cl.5: **D06P 3/24**, D06P 3/06, C09B 67/00

(30) Priorität: **23.10.89 CH 3827/89**

(43) Veröffentlichungstag der Anmeldung: **02.05.91 Patentblatt 91/18**

(84) Benannte Vertragsstaaten: **BE CH DE DK ES FR GB IT LI**

(71) Anmelder: **CIBA-GEIGY AG**
**Klybeckstrasse 141**
**CH-4002 Basel(CH)**

(72) Erfinder: **Walter, Harald, Dr.**
**Rufacherstrasse 20**
**CH-4055 Basel(CH)**

## (54) Verfahren zum Trichromie-Färben oder -Bedrucken.

(57) Verfahren zum Trichromie-Färben oder Bedrücken von natürlichen und synthetischen Polyamidfasermaterialien, welches dadurch gekennzeichnet ist, dass man mindestens einen roten Farbstoff der Formel

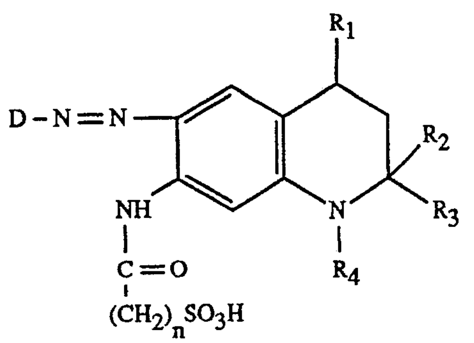

(1),

worin D, $R_1$, $R_2$, $R_3$, $R_4$ und n die in Anspruch 1 angegebenen Bedeutungen haben, zusammen mit mindestens einem gelben oder orangen Farbstoff der Formeln

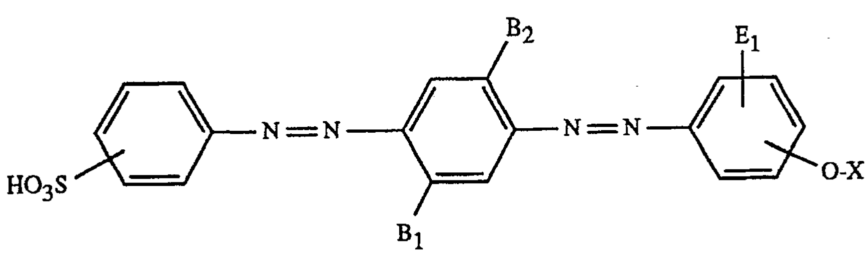

(2),

worin $B_1$, $B_2$, $E_1$ und X die in Anspruch 1 angegebenen Bedeutungen haben, oder

EP 0 425 435 A1

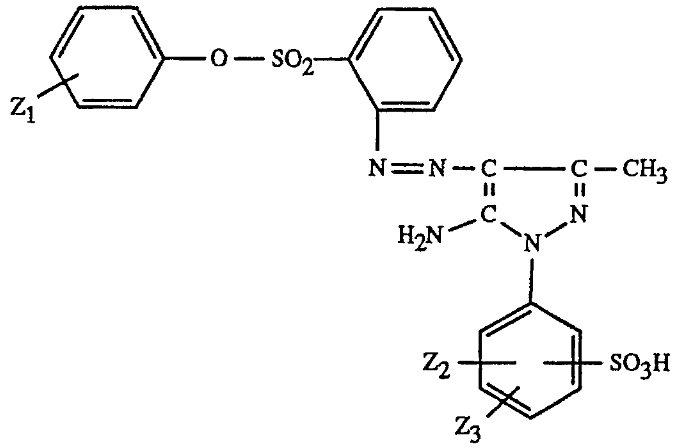

(3),

worin $Z_1$, $Z_2$ und $Z_3$ die in Anspruch 1 angegebenen Bedeutungen haben, oder Mischungen von Farbstoffen der Formeln (2) und (3), oder einem gelben Farbstoff der Formel

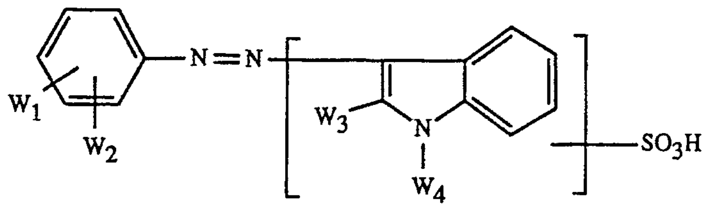

(4),

worin $W_1$, $W_2$, $W_3$ und $W_4$ die in Anspruch 1 angegebenen Bedeutungen haben oder Mischungen von Farbstoffen der Formeln (2), (3) und (4) und mindestens einem blauen Farbstoff der Formel

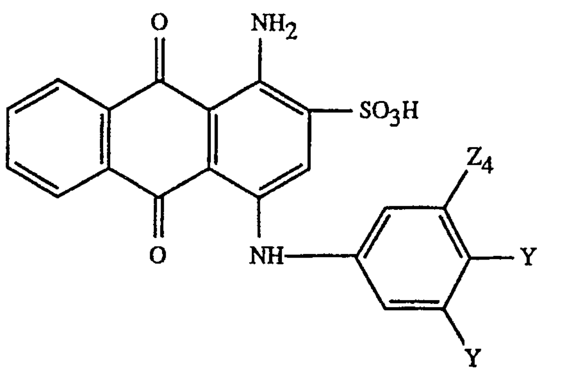

(5),

worin ein Y und $Z_4$ die in Anspruch 1 angegebenen Bedeutungen haben.

Das erfindungsgemässe Verfahren eignet sich zum Färben von natürlichen oder synthetischen Polyamidmaterialien aus wässriger Flotte oder zum Drucken mit Druckpasten; und insbesondere zum Färben aus Kurzflotten.

# VERFAHREN ZUM TRICHROMIE-FÄRBEN ODER -BEDRUCKEN

Die vorliegende Erfindung betrifft ein Verfahren zum Trichromie-Färben oder -Bedrücken von natürlichen und synthetischen Polyamidmaterialien mit mindestens einem blaufärbenden, sulfogruppenhaltigen Anthrachinonfarbstoff, mindestens einem rotfärbenden, sulfogruppenhaltigen Azofarbstoff und mindestens einem gelb- oder orangefärbenden, sulfogruppenhaltigen Azofarbstoff.

Die der vorliegenden Erfindung zugrundeliegende Aufgabe war es, ein Verfahren zum Färben oder Bedrücken von natürlichen und synthetischen Polyamidmaterialien mit zur Kombination nach dem Trichromie-Prinzip geeigneten Farbstoffen zu finden.

Es wurde nun gefunden, dass man diese Aufgabe erfindungsgemäss durch das nachfolgend beschriebene Verfahren lösen kann. Die so erhaltenen Färbungen genügen den gestellten Aufgaben. Insbesondere zeichnen sich die erhaltenen Färbungen durch einen gleichmässigen Farbaufbau bei gleichzeitiger Nuancenkonstanz in verschiedenen Konzentrationen und eine gute Kombinierbarkeit aus.

Gegenstand der vorliegenden Erfindung ist ein Verfahren zum Trichromie-Färben oder Bedrücken von natürlichen und synthetischen Polyamidfasermaterialien, welches dadurch gekennzeichnet ist, dass man mindestens einen roten Farbstoff der Formel

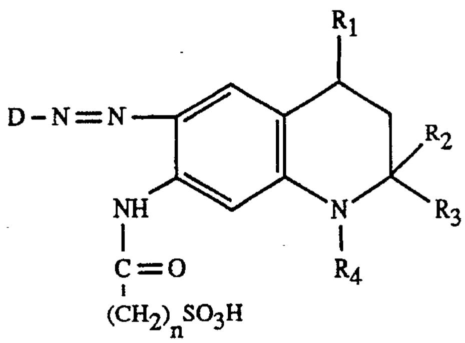

(1),

worin D eine Diazokomponente der Benzol- oder Naphthalinreihe, $R_1$, $R_2$, $R_3$ und $R_4$ unabhängig voneinander Wasserstoff oder gegebenenfalls substituiertes $C_1$-$C_8$-Alkyl und n die Zahl 1, 2, 3, 4 oder 5 ist, zusammen mit mindestens einem gelben oder orangen Farbstoff der Formeln

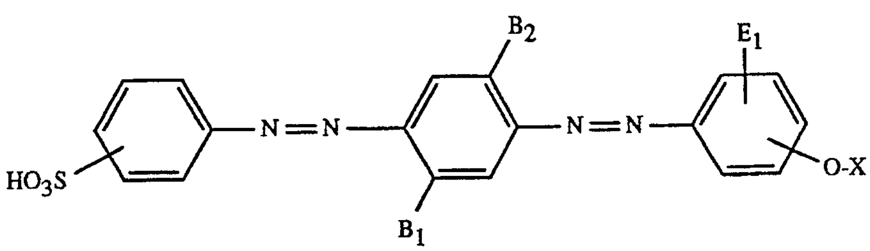

(2),

worin $B_1$, $B_2$ und $E_1$ Wasserstoff, $C_{1-4}$-Alkyl oder $C_{1-4}$-Alkoxy und X geradkettiges oder verzweigtes $C_{1-4}$-Alkyl oder geradkettiges oder verzweigtes $C_{2-4}$-Hydroxyalkyl bedeuten, oder

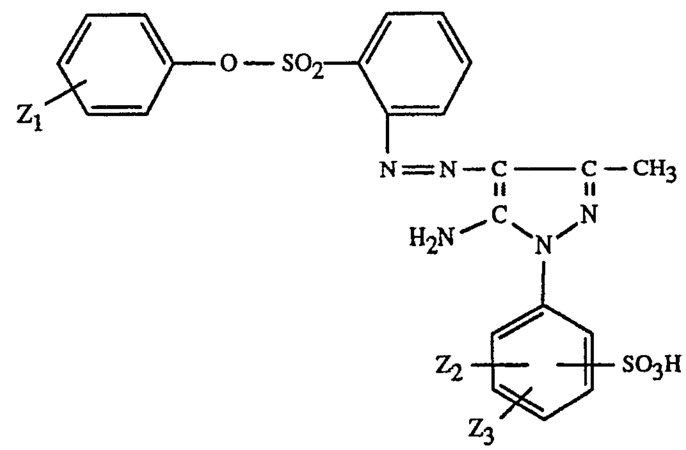

(3),

worin $Z_1$, $Z_2$ und $Z_3$ unabhängig voneinander Wasserstoff, Halogen, $C_{1-4}$-Alkyl oder $C_{1-4}$-Alkoxy bedeuten, oder Mischungen von Farbstoffen der Formeln (2) und (3), oder einem gelben Farbstoff der Formel

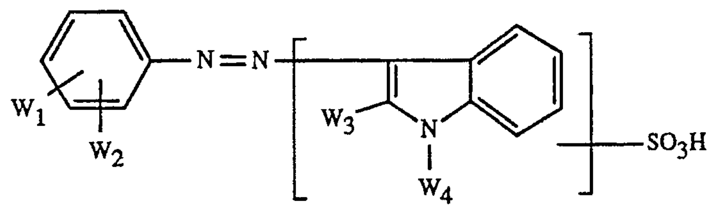

(4),

worin $W_1$ Wasserstoff, $C_{1-4}$-Alkyl, $C_{1-4}$-Alkoxy, Halogen, $C_{2-4}$-Alkanoylamino oder ein gegebenenfalls substituierter Arylsulfonyl-, Aryloxy- oder Arylcarbonylrest, $W_2$ Wasserstoff, Halogen, ein gegebenenfalls substituierter Alkyl, Aryloxy- oder Aryloxysulfonylrest oder ein Rest der Formel

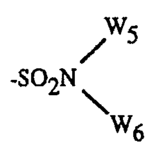 oder 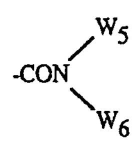 ,

$W_3$ ein gegebenenfalls substituierter Alkyl- oder Arylrest, $W_4$ Wasserstoff oder Alkyl und $W_5$ und $W_6$ unabhängig voneinander Wasserstoff oder ein gegebenenfalls substituierter Alkyl-, Cycloalkyl- oder Arylrest ist, oder Mischungen von Farbstoffen der Formeln (2), (3) und (4) und mindestens einem blauen Farbstoff der Formel

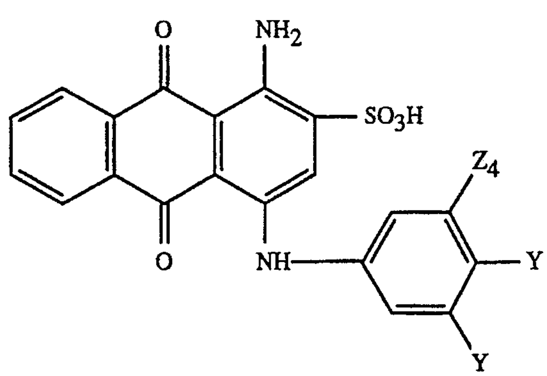

(5),

worin ein Y Wasserstoff oder Methyl und das andere Y $C_{2-4}$-Alkanoylamino oder $C_2$-$C_4$-Hydroxyalkylsulphamoyl bedeutet und $Z_4$ Wasserstoff oder Methyl ist, verwendet.

Unter Trichromie ist die additive Farbmischung passend gewählter gelb- bzw. orange-, rot- und blaufärbender Farbstoffe zu verstehen, mit denen jede gewünschte Nuance des sichbaren Farbspektrums

durch geeignete Wahl der Mengenverhältnisse der Farbstoffe eingestellt werden kann.

Der Rest D in Formel (1) kann die bei Diazokomponenten üblichen Substituenten enthalten, z.B. Alkylgruppen mit 1 bis 8, vorzugsweise 1 bis 4 Kohlenstoffatomen, wie z.B. Methyl, Aethyl, Propyl, Isopropyl, Butyl, Isobutyl, sek.-Butyl, tert-Butyl, Hexyl, Octyl, wobei die Alkylgruppen durch Sulfo oder Sulfato substituiert sein können, Alkoxygruppen mit 1 bis 8 Kohlenstoffatomen, insbesondere 1 bis 4 Kohlenstoffatomen, wie z.B. Methoxy, Aethoxy, Propoxy, Isopropoxy, Butoxy, Acylaminogruppen wie Alkanoylaminogruppen mit 2 bis 8 Kohlenstoffatomen und Alkoxycarbonylaminogruppen mit 2 bis 8 Kohlenstoffatomen, wie z.B. Acetylamino, Propionylamino, Methoxycarbonylamino, Aethoxycarbonylamino, Alkanoylgruppen mit 2 bis 8, vorzugsweise 2 bis 4 Kohlenstoffatomen, wie z.B. Acetyl, Propionyl, Butyryl oder Isobutyryl, $C_5$-$C_7$-Cycloalkylcarbonyl, wie z.B. Cyclohexylcarbonyl, im Cycloalkylring durch $C_1$-$C_4$-Alkyl, wie z.B. Methyl, Aethyl, Propyl, Butyl, oder Halogen, wie z.B. Fluor, Chlor, Brom, Sulfo oder Sulfato, substituiertes $C_5$-$C_7$-Cycloalkylcarbonyl, Benzoyl, im Phenylring durch $C_1$-$C_4$-Alkyl, wie z.B. Methyl, Aethyl, Propyl, Butyl oder Halogen, wie z.B. Fluor, Chlor, Brom, Sulfo oder Sulfato, substituiertes Benzoyl, gegebenenfalls durch $C_1$-$C_4$-Alkyl, Halogen, Sulfo oder Sulfato substituiertes Benzthiazol oder Benzoxazol, Benzoylamino, Amino, Mono- oder Dialkylamino mit 1 bis 8 Kohlenstoffatomen im Alkylrest, Phenylamino, Alkoxycarbonyl mit 1 bis 8 Kohlenstoffatomen im Alkoxyrest, $C_5$-$C_7$-Cycloalkylaminosulfonyl, Nitro, Cyan, Trifluormethyl, Halogen, wie Fluor, Brom oder insbesondere Chlor, Sulfamoyl, am Stickstoffatom ein- oder zweifach durch $C_1$-$C_4$-Alkyl, $C_5$-$C_7$-Cycloalkyl oder Phenyl substituiertes Sulfamoyl, Carbamoyl, Ureido, Hydroxy, $C_1$-$C_8$-Alkylsulfonyl, $C_1$-$C_8$-Alkylaminosulfonyl, gegebenenfalls im Phenylring durch $C_1$-$C_4$-Alkyl, Halogen wie z.B. Fluor, Chlor, Brom, Sulfo oder Sulfato substituiertes Phenylsulfonyl, Carboxy, Sulfomethyl, Sulfo, Sulfato, Thiosulfato, Arylazogruppen wie z.B. die Phenylazo- und Naphthylazogruppe sowie Phenyl, Naphthyl, Phenoxy, Phenoxysulfonyl, Phenylaminosulfonyl, wobei die angegebenen Phenyl- oder Naphthylreste durch die oben angegebenen Substituenten weitersubstituiert sein können. Gegebenenfalls können je zwei benachbarte Substituenten der genannten Ringsysteme weitere ankondensierte Phenylringe oder Cyclohexylringe bilden.

Als $C_1$-$C_8$-Alkyl kommt für $R_1$, $R_2$, $R_3$ und $R_4$ in Formel (1) z.B. in Betracht:

Methyl, Aethyl, Propyl, Isopropyl, Butyl, Isobutyl, sek.-Butyl, tert.-Butyl, Pentyl, Hexyl, Heptyl oder Octyl, sowie die entsprechenden Reste, die z.B. durch Hydroxy, Alkoxy mit 1 bis 4 Kohlenstoffatomen, wie z.B. Methoxy, Aethoxy, Propoxy, Isopropoxy oder Butoxy, Sulfo, Sulfato, Thiosulfato, Cyan oder Halogen, wie z.B. Fluor, Chlor oder Brom, und Phenyl substituiert sind, wobei der Phenylrest durch die oben angegebenen Substituenten weitersubstituiert sein kann.

Als Alkylreste kommen für $B_1$, $B_2$, $E_1$, X, $Z_1$, $Z_2$ und $Z_3$ in den Formeln (2) und (3) unabhängig voneinander geradkettige oder verzweigte Alkylreste in Betracht, wie beispielsweise Methyl, Aethyl, Propyl, Isopropyl, Butyl, sek.-Butyl, Isobutyl und tert.-Butyl.

Als Halogen kommt für $Z_1$, $Z_2$ und $Z_3$ in Formel (3), Fluor oder Brom und insbesondere Chlor in Betracht.

Als $C_{2-4}$-Alkanoylamino kommt für Y in Formel (5) beispielsweise Acetylamino-, Propionylamino- oder Butyrylaminorest in Betracht.

Als Alkoxyreste kommten für $B_1$, $B_2$, $E_1$, $Z_1$, $Z_2$ und $Z_3$ in den Formeln (2) und (3) beispielsweise der Methoxy-, Aethoxy-, Propoxy-, Isopropoxy-, Butoxy-, sek.-Butoxy-, Isobutoxy- oder tert.-Butoxyrest in Betracht.

Als Hydroxyalkylrest kommt für X in Formel (2) ein geradkettiger oder verzweigter Hydroxyalkylrest in Betracht, wie beispielsweise der $\beta$-Hydroxyäthyl-, $\beta$-Hydroxypropyl-, $\beta$-Hydroxybutyl- oder der $\alpha$-Aethyl-$\beta$-hydroxyäthylrest.

Als $C_{2-4}$-Hydroxylalkylsulphamoylrest kommt für Y in Formel (5) beispielsweise der $\beta$-Hydroxyäthylsulphamoyl-, $\beta$-Hydroxypropylsulphamoyl-, $\gamma$-Hydroxypropylsulphamoyl-oder der $\beta$-Hydroxybutylsulphamoylrest in Betracht.

Bedeutet $W_1$ in Formel (4) $C_{1-4}$-Alkyl, so handelt es sich um Methyl, Aethyl, n-Propyl, Isopropyl, n-Butyl, sek.-Butyl, Isobutyl oder tert.-Butyl.

Bedeutet $W_1$ in Formel (4) $C_{1-4}$-Alkoxy, so handelt es sich um Methoxy, Aethoxy, n-Propoxy, Isopropoxy, n-Butoxy, sek.-Butoxy, Isobutoxy oder tert-Butoxy.

Bedeutet $W_1$ in Formel (4) $C_{2-4}$-Alkanoylamino, so handelt es sich beispielsweise um Acetylamino, Propionylamino oder Butyrylamino.

Bedeutet $W_1$ in Formel (4) einen gegebenenfalls substituierten Arylsulfonyl-, Aryloxy-oder Arylcarbonylrest, so bedeutet Aryl vorzugsweise einen Rest der Benzol- oder Naphthalinreihe, der weitersubstituiert sein kann, beispielsweise durch $C_{1-4}$-Alkylgruppen, wie Methyl und Aethyl, $C_{1-4}$-Alkoxygruppen, wie Methoxy und Aethoxy, Halogen, wie Fluor, Chlor und Brom, Alkanoylaminogruppen mit 1 bis 6 Kohlenstoffatomen, wie Acetylamino, und Hydroxy.

Bedeutet $W_1$ und/oder $W_2$ Halogen, so handelt es sich um Fluor, Chlor oder Brom.

Bedeutet $W_2$ in Formel (4) einen gegebenfalls substituierten Aryloxy- oder Aryloxysulfonylrest, so bedeutet Aryl einen Rest der Benzol- oder Naphthalinreihe, der weitersubstituiert sein kann, beispielsweise durch $C_{1-4}$-Alkylgruppen, wie Methyl und Aethyl, $C_{1-4}$-Alkoxygruppen, wie Methoxy und Aethoxy, Halogen, wie Fluor, Chlor und Brom, Alkanoylaminogruppen mit 1 bis 6 Kohlenstoffatomen, wie Acetylamino, und Hydroxy.

Bedeuten $W_2$, $W_3$, $W_5$ oder $W_6$ in Formel (4) einen gegebenenfalls substituierten Alkylrest, so handelt es sich unabhängig voneinander vorzugsweise um einen geradkettigen oder verzweigten $C_{1-12}$-Alkyl- insbesondere $C_{1-4}$-Alkylrest, der weitersubstituiert sein kann, z.B. durch Halogen, wie Fluor, Chlor oder Brom, Hydroxy, Cyano, $C_{1-4}$-Alkoxy, wie Methoxy oder Aethoxy, und Alkanoylgruppen mit 1 bis 6 Kohlenstoffatomen, wie die Acetyl- oder Propionylgruppe, und die Benzoylgruppe. Der Alkylrest $W_3$ kann auch durch Sulfo substituiert sein. Als Beispiele für $W_2$, $W_3$, $W_5$ und $W_6$ als Alkylrest seien genannt: Methyl, Aethyl, Propyl, Isopropyl, Butyl, sek.-Butyl, tert.-Butyl, Isobutyl und Trifluormethyl.

Bedeuten $W_3$, $W_5$ und $W_6$ in Formel (4) einen gegebenenfalls substituierten Arylrest, so gehört dieser unabhängig voneinander vorzugsweise der Benzol- oder Naphthalinreihe an, er kann weitersubstituiert sein, beispielsweise durch $C_{1-4}$-Alkylgruppen, wie Methyl, $C_{1-4}$-Alkoxygruppen, wie Methoxy und Aethoxy, Halogen, wie Fluor, Chlor oder Brom, Trifluormethyl, Alkanoylaminogruppen mit 1 bis 6 Kohlenstoffatomen, wie Acetylamino, Hydroxy und Carboxy. Der Arylrest $W_3$ kann auch durch Sulfo substituiert sein. Insbesondere ist $W_3$, $W_5$ und $W_6$ als Arylrest ein Phenylrest, der durch Methyl, Trifluormethyl und Chlor substituiert sein kann.

Bedeutet $W_4$ in Formel (4) einen Alkylrest, so kommt vorzugsweise ein geradkettiger oder verzweigter $C_{1-12}$-Alkyl- und insbesondere $C_{18}$-Alkylrest in Betracht. Als Beispiele seien genannt: Methyl, Aethyl, Propyl, Isopropyl, Butyl, sek.-Butyl, tert.-Butyl, Isobutyl, Pentyl-(1), Pentyl-(3), Heptyl-(1), Heptyl-(3) und Octyl-(1).

Bedeuten $W_5$ und $W_6$ einen gegebenenfalls substituierten Cycloalkylrest, so kommen unabhängig voneinander vorzugsweise Cycloalkylgruppen mit 5- bis 7-gliedrigen Ringen in Betracht, die weitersubstituiert sein können, z.B. durch $C_{1-4}$-Alkyl, wie Methyl. Insbesondere kommt die Cyclohexylgruppe in Betracht.

Eine bevorzugte Ausführungsform des erfindungsgemässen Verfahrens ist dadurch gekennzeichnet, dass man einen roten Farbstoff der Formel

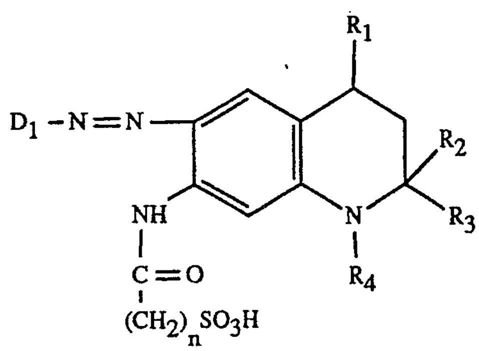

(6),

worin $D_1$ Phenyl oder Naphthyl ist, und jeder dieser Reste substituiert sein kann durch $C_1$-$C_8$-Alkyl, $C_1$-$C_8$-Alkoxy, $C_2$-$C_8$-Alkanoylamino, $C_2$-$C_8$-Alkoxycarbonylamino, $C_2$-$C_8$-Alkanoyl, $C_5$-$C_7$-Cycloalkylcarbonyl, im Cycloalkylring durch $C_1$-$C_4$-Alkyl, Halogen, Sulfo oder Sulfato substituiertes $C_5$-$C_7$-Cycloalkylcarbonyl, Benzoyl, im Phenylring durch $C_1$-$C_4$-Alkyl, Halogen, Sulfo oder Sulfato substituiertes Benzoyl, Benzthiazol, Benzoxazol, durch $C_1$-$C_4$-Alkyl, Halogen, Sulfo oder Sulfato substituiertes Benzthiazol oder Benzoxazol, Benzoylamino, Amino, Mono- oder Dialkylamino mit 1 bis 8 Kohlenstoffatomen im Alkylrest, Phenylamino, $C_2$-$C_8$-Alkoxycarbonyl, Nitro, Cyan, Trifluormethyl, Halogen, Sulfamoyl, am Stickstoffatom ein- oder zweifach durch $C_1$-$C_4$-Alkyl, $C_5$-$C_7$-Cycloalkyl oder Phenyl substituiertes Sulfamoyl, Carbamoyl, Ureido, Hydroxy, $C_1$-$C_8$-Alkylsulfonyl, Phenylsulfonyl, im Phenylring durch $C_1$-$C_4$-Alkyl, Halogen, Sulfo oder Sulfato substituiertes Phenylsulfonyl, Carboxy, Sulfomethyl, Sulfo, Sulfato, Thiosulfato und Phenylazo- und Naphthylazogruppen, und gegebenenfalls je 2 benachbarte Substituenten der genannten Ringsysteme weitere ankondensierte Phenylringe oder Cyclohexylringe bilden können und $R_1$, $R_2$, $R_3$, $R_4$ und n die unter Formel (1) angegebenen Bedeutungen haben, vorzugsweise worin jeder der für $D_1$ oben genannten Reste substituiert sein kann durch $C_1$-$C_8$-Alkyl, $C_1$-$C_8$-Alkoxy, $C_2$-$C_8$-Alkanoylamino, $C_2$-$C_8$-Alkoxycarbonylamino, $C_2$-$C_8$-Alkoxycarbonylamino, $C_2$-$C_8$-Alkanoyl, $C_5$-$C_7$-Cycloalkylcarbonyl, im Cycloalkylring durch $C_1$-$C_4$-

Alkyl oder Halogen substituiertes $C_5$-$C_7$-Cycloalkylcarbonyl, Benzoyl, im Phenylring durch $C_1$-$C_4$-Alkyl oder Halogen substituiertes Benzoyl, Benzthiazol, Benzoxazol, Benzoylamino, Amino, Mono- oder Dialkylamino mit 1 bis 8 Kohlenstoffatomen im Alkylrest, Phenylamino, $C_2$-$C_8$-Alkoxycarbonyl, Nitro, Cyan, Trifluormethyl, Halogen, Sulfamoyl, am Stickstoffatom ein- oder zweifach durch $C_1$-$C_4$-Alkyl, $C_5$-$C_7$-Cycloalkyl oder Phenyl substituiertes Sulfamoyl, Carbamoyl, Ureido, Hydroxy, $C_1$-$C_8$-Alkylsulfonyl, Phenylsulfonyl, im Phenylring durch $C_1$-$C_4$-Alkyl und/oder Halogen substituiertes Phenylsulfonyl, Carboxy, Sulfomethyl, Sulfo, Sulfato, Thiosulfato und Phenylazo- und Naphthylazogruppen, und gegebenenfalls je 2 benachbarte Substituenten der genannten Ringsysteme weitere ankondensierte Phenylringe oder Cyclohexylringe bilden können und $R_1$, $R_2$, $R_3$, $R_4$ und n die unter Formel (1) angegebenen Bedeutungen haben, verwendet.

Eine besonders bevorzugte Ausführungsform des erfindungsgemässen Verfahrens ist dadurch gekennzeichnet, dass man einen roten Farbstoff der Formel

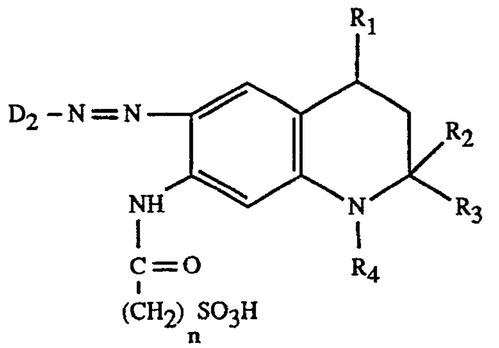

(7),

worin $D_2$ Phenyl ist, welches substituiert sein kann durch $C_1$-$C_8$-Alkyl, $C_2$-$C_8$-Alkanoyl, $C_2$-$C_8$-Alkoxycarbonyl, $C_5$-$C_7$-Cycloalkylcarbonyl, Benzoyl, im Phenylring durch $C_1$-$C_4$-Alkyl, Halogen, Sulfo oder Sulfato substituiertes Benzoyl, Benzthiazol, Benzoxazol, durch $C_1$-$C_4$-Alkyl, Halogen, Sulfo oder Sulfato substituiertes Benzthiazol oder Benzoxazol, Halogen, Phenylsulfonyl, im Phenylring durch $C_1$-$C_4$-Alkyl, Halogen, Sulfo oder Sulfato substituiertes Phenylsulfonyl, $C_1$-$C_8$-Alkylsulfonyl, am Stickstoffatom ein- oder zweifach durch $C_1$-$C_4$-Alkyl, $C_5$-$C_7$-Cycloalkyl oder Phenyl substituiertes Sulfamoyl und $R_1$, $R_2$, $R_3$, $R_4$ und n die unter Formel (1) angegebenen Bedeutungen haben, vorzugsweise worin der oben für $D_2$ genannte Rest substituiert sein kann durch $C_1$-$C_8$-Alkyl, $C_2$-$C_8$-Alkanoyl, $C_2$-$C_8$-Alkoxycarbonyl, $C_5$-$C_7$-Cycloalkylcarbonyl, $C_1$-$C_4$-Alkylsulfonyl, Benzoyl, im Phenylring durch $C_1$-$C_4$-Alkyl oder Halogen substituiertes Benzoyl, Benzthiazol, Benzoxazol, Halogen, Phenylsulfonyl, im Phenylring durch $C_1$-$C_4$-Alkyl oder Halogen substituiertes Phenylsulfonyl, durch $C_1$-$C_8$-Alkyl, $C_5$-$C_7$-Cycloalkyl oder Phenyl substituiertes Sulfamoyl und $R_1$, $R_2$, $R_3$, $R_4$ und n die unter Formel (1) angegebenen Bedeutungen haben.

Besonders bevorzugt werden in den erfindungsgemässen Verfahren rote Farbstoffe der Formeln (1), (6) oder (7) verwendet, worin $R_1$ Wasserstoff oder $C_1$-$C_4$-Alkyl, insbesondere Methyl, $R_2$ und $R_3$ unabhängig voneinander Wasserstoff oder $C_1$-$C_4$-Alkyl, insbesondere Methyl, $R_4$ $C_1$-$C_4$-Alkyl, insbesondere Aethyl, und n die Zahl 1 oder 2 ist.

Weitere bevorzugte Ausführungsformen des erfindungsgemässen Verfahrens sind dadurch gekennzeichnet, dass man mindestens einen gelben oder orangen Farbstoff der Formel

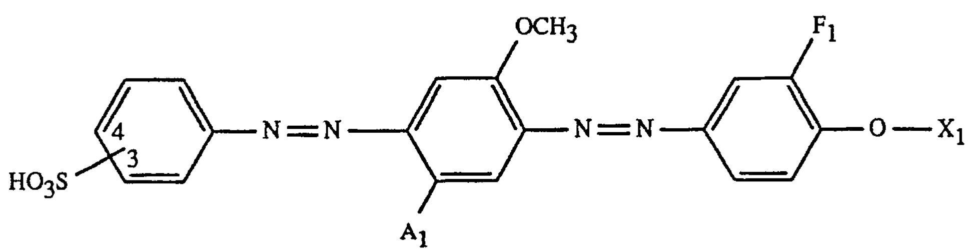

(8),

worin $A_1$ Wasserstoff oder Methyl, $F_1$ Wasserstoff oder Methyl und $X_1$ Methyl, Aethyl, β-Hydroxyäthyl, β-Hydroxypropyl, β-Hydroxybutyl oder α-Aethyl-β-hydroxyäthyl ist, und die Sulfogruppe in 3- oder 4-Stellung gebunden ist, oder eine Mischung aus mindestens einem Farbstoff der Formel (8) und einem gelben Farbstoff der Formel

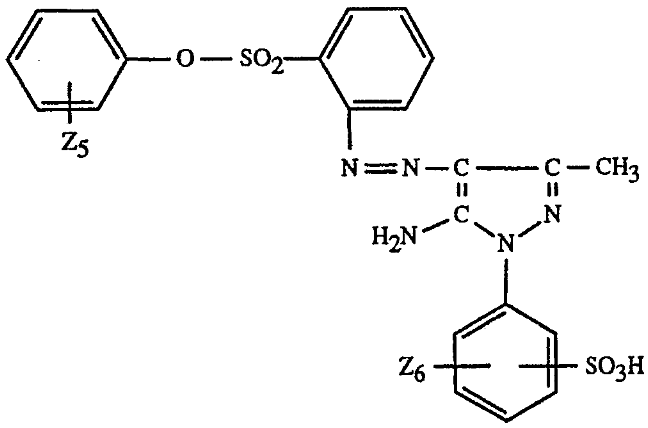

(9),

worin $Z_5$ und $Z_6$ unabhängig voneinander Wasserstoff, Methyl oder Chlor bedeuten, oder einen gelben Farbstoff der Formel

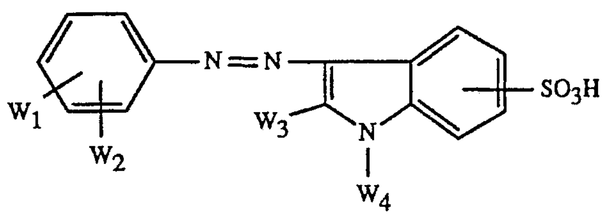

(10),

worin $W_1$ Wasserstoff, Methyl, Chlor, Methoxy, Aethoxy, o-Methylphenoxy, Phenoxy, Acetylamino, Phenylsulfonyl, p-Methylphenylsulfonyl, p-Chlorphenylsulfonyl, Naphthylsulfonyl, p-Methylbenzoyl oder p-Chlorbenzoyl, $W_2$ Wasserstoff, Chlor, Methyl, Trifluormethyl, o-Methylphenoxy, o-Chlorphenoxy, o-Chlorphenoxysulfonyl, $-SO_2NH_2$, N-$C_{1-2}$-Alkylaminosulfonyl, N,N-Dimethylaminosulfonyl, N-Methyl-N-β-hydroxyäthylaminosulfonyl, N-Methyl-N-cyclohexylaminosulfonyl, N-Phenylaminosulfonyl, N-o-Methylphenylaminosulfonyl, N-o-Chlorphenylaminosulfonyl, N-m-Trifluormethylphenylaminosulfonyl, N-Aethyl-N-phenylaminosulfonyl, $-CONH_2$ oder $-CON(CH_3)_2$, $W_3$ Methyl oder Phenyl und $W_4$ Wasserstoff, Methyl, Aethyl oder Octyl ist, oder eine Mischung aus mindestens einem Farbstoff der Formel (8) und einem Farbstoff der Formel (10); zusammen mit mindestens einem blauen Farbstoff der Formel

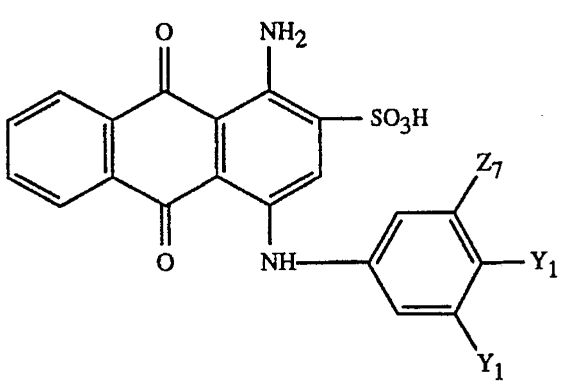

(11),

worin ein $Y_1$ Wasserstoff oder Methyl und das andere $Y_1$ Acetylamino, Propionylamino oder $C_{2-4}$-Hydroxyalkylsulphamoyl und $Z_7$ Wasserstoff oder Methyl ist, oder eine Mischung der blauen Farbstoffe der Formeln

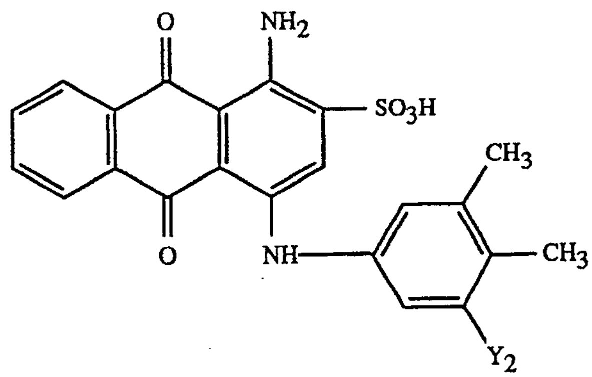

(12),

worin $Y_2$ ein $C_{2-4}$-Hydroxyalkylsulphamoylrest ist, und

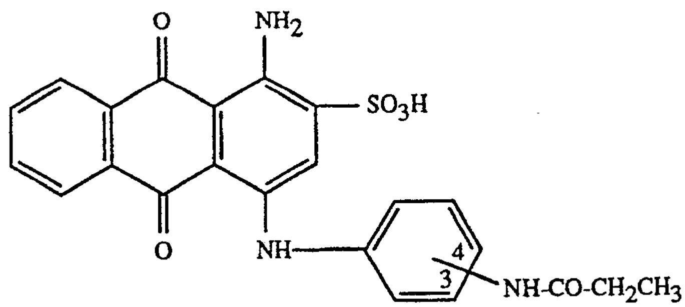

(13)

worin der Rest $-NH-CO-CH_2CH_3$ in 3-oder 4-Stellung gebunden ist, verwendet.

Eine ganz besonders bevorzugte Ausführungsform des erfindungsgemässen Verfahrens ist dadurch gekennzeichnet, dass man einen roten Farbstoff der Formel

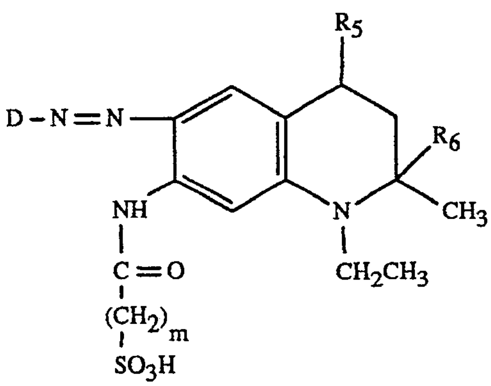

(14),

worin $R_5$ und $R_6$ unabhängig voneinander Wasserstoff oder Methyl, m die Zahl 1 oder 2 ist und D die unter Formel (1) angegebenen Bedeutungen hat, insbesondere worin D die für $D_1$ unter Formel (6) oder die für $D_2$ unter Formel (7) angegebene Bedeutungen hat, verwendet.

Ganz besonders wichtige Ausführungsformen des erfindungsgemässen Verfahrens sind dadurch gekennzeichnet, dass man einen roten Farbstoff der Formel

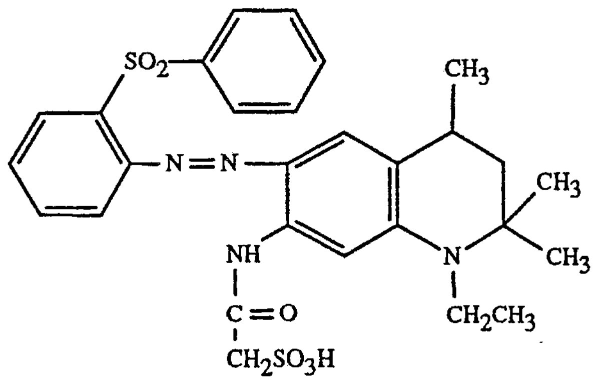

(15),

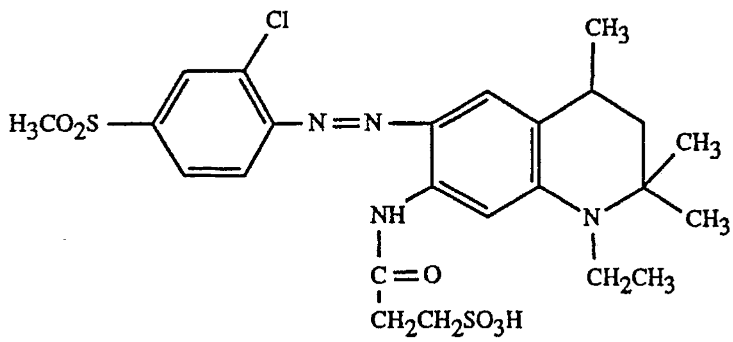

(16),

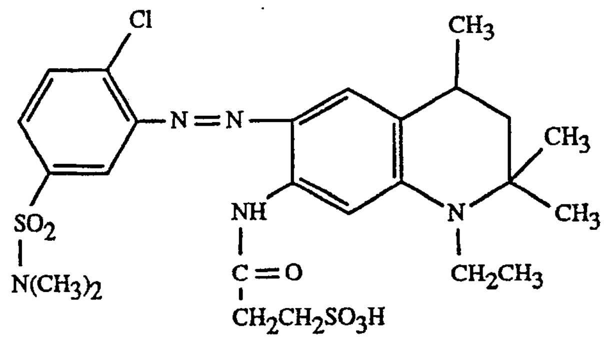

(17),

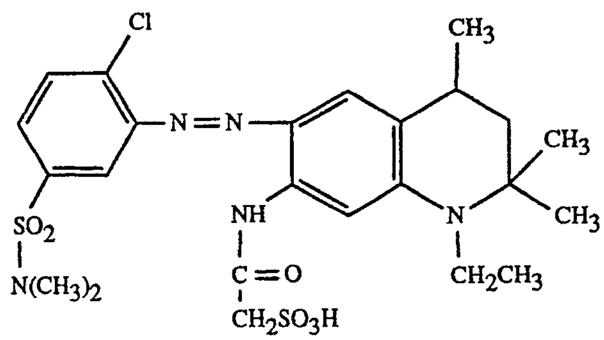

(18),

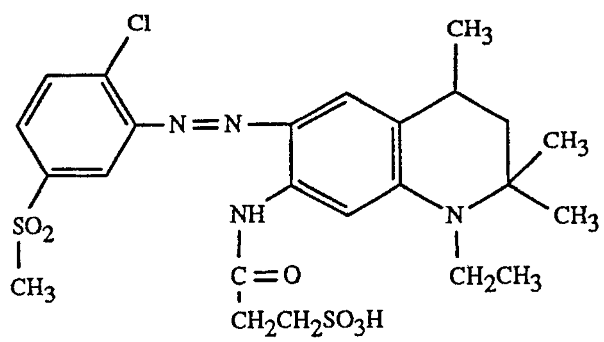

(19),

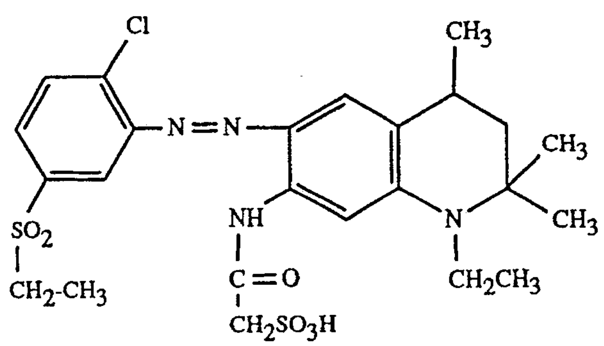

(20),

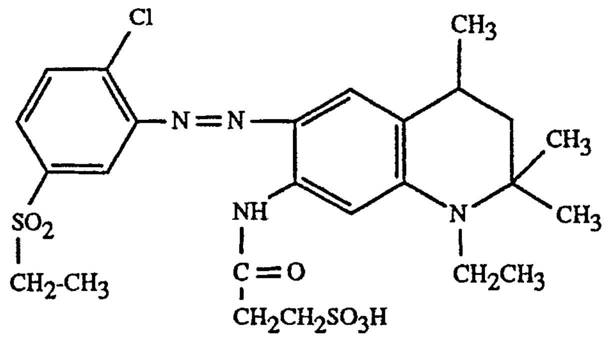

(21) oder

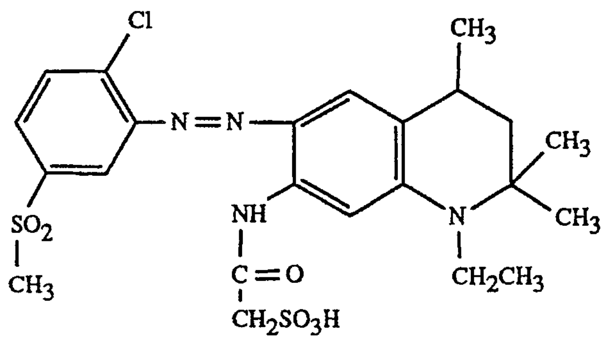

(22)

zusammen mit dem gelben Farbstoff der Formel

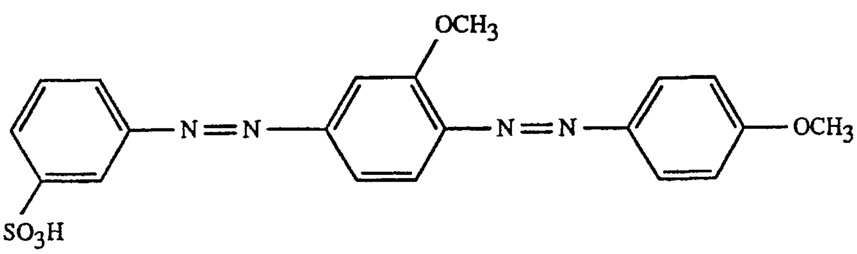

(23),

oder dem orangen Farbstoff der Formel

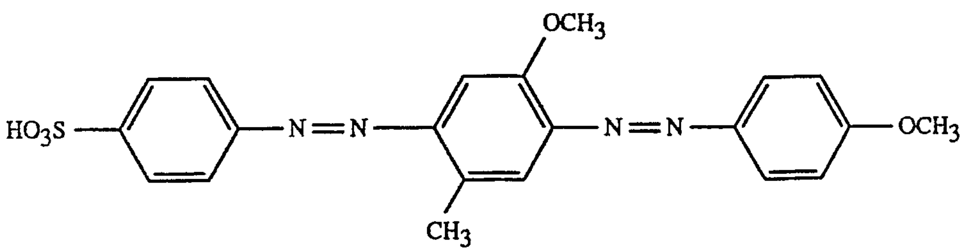

(24)

oder einer Mischung des gelben Farbstoffes der Formel (23) mit dem orangen Farbstoff der Formel (24), oder einer Mischung der Farbstoffe der Formeln (23) und/oder (24) mit dem Farbstoff der Formel

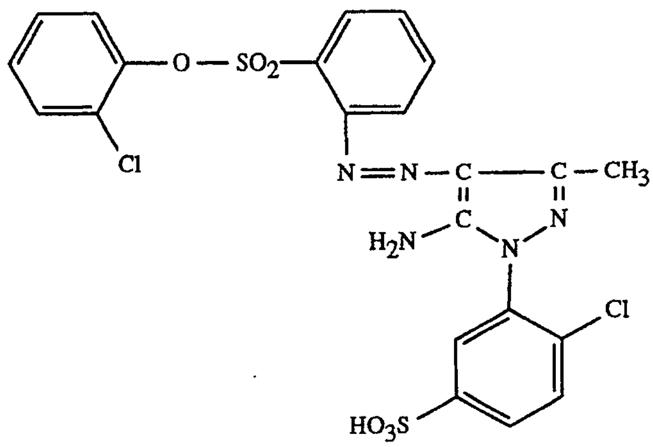

(25),

wobei das Gewichtsverhältnis der Farbstoffe der Formeln (23) und (24) 60:40 bis 40:60 und insbesondere 1:1 und das Gewichtsverhältnis der Farbstoffe der Formeln (23) oder (24) und (25) 80:20 bis 20:80 und insbesondere 70:30 ist, und das Gewichtsverhältnis der Farbstoffe der Formeln (23), (24) und (25) 60:20:20, 20:60:20 bis 20:20:60 und insbesondere 1:1:1 ist, oder dem gelben Farbstoff der Formel

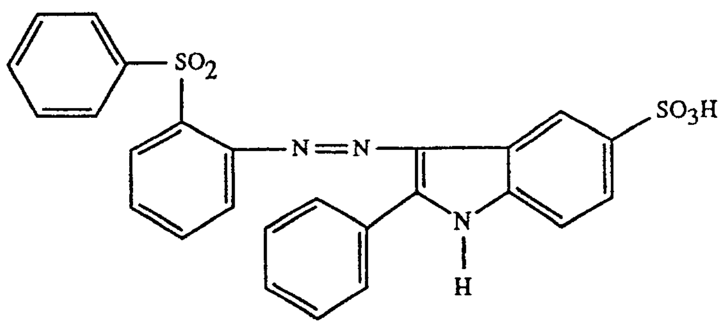

(26)

und mindestens einem der blauen Farbstoffe der Formeln

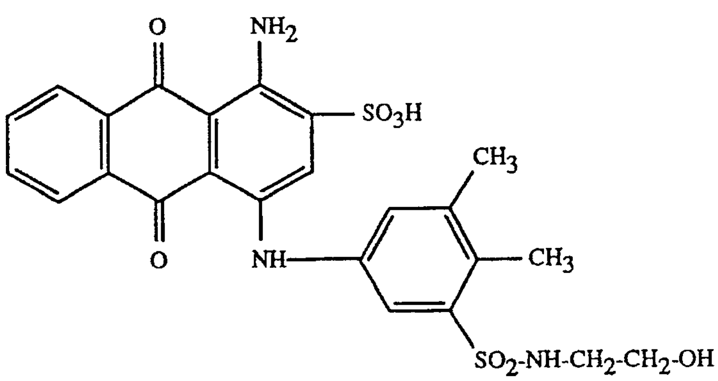

(27),

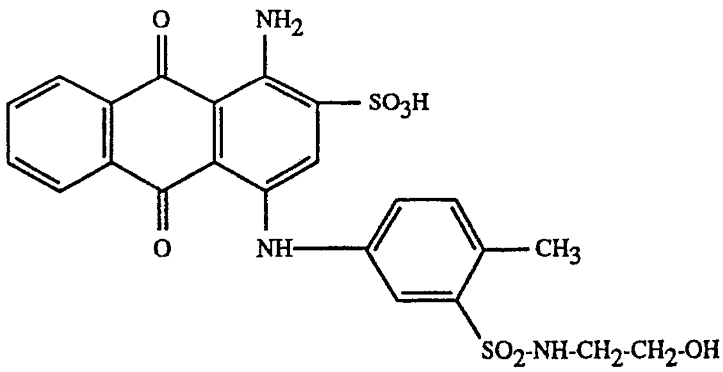

(28),

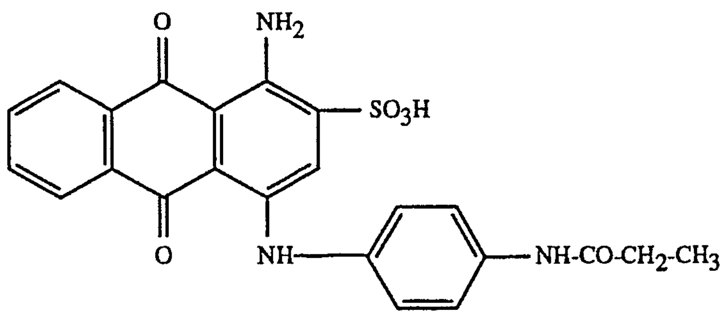

(29),

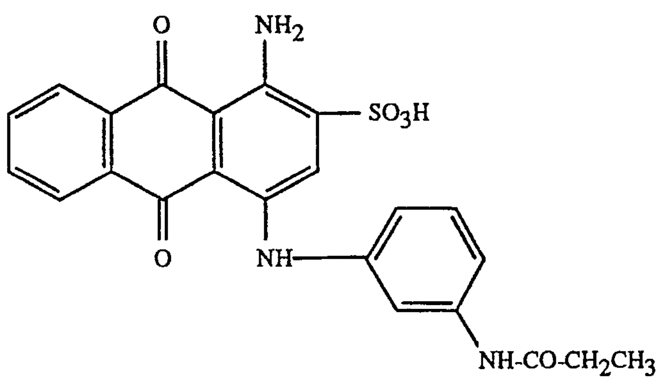

(30),

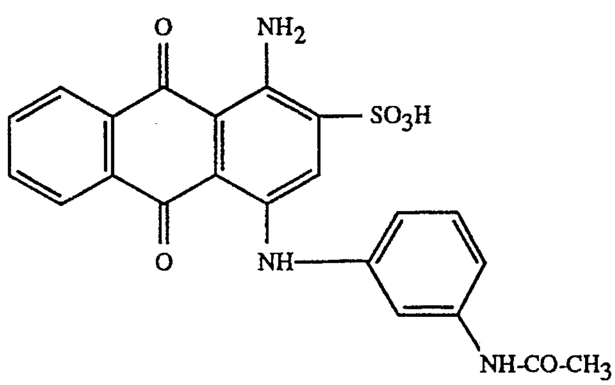

(31),

oder eine Mischung eines Farbstoffs der Formeln (27) oder (28) mit einem Farbstoff der Formeln (29), (30) oder (31) verwendet.

Die in den erfindungsgemässen Verfahren zum Trichromie-Färben oder -Bedrucken verwendeten Farbstoffe der Formeln (2), (3), (4) und (5) sind z.B. aus der EP-A-181 292 bzw. EP-A-127 579 bekannt und

können in Analogie zu bekannten Verfahren hergestellt werden. Die Farbstoffe der Formel (1) werden hergestellt, indem man ein Amin der Formel

$D\text{-}NH_2$ (32)

diazotiert und auf eine Kupplungskomponente der Formel

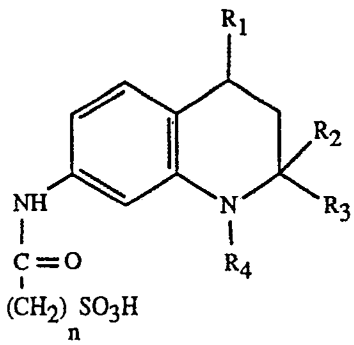

(33)

kuppelt, wobei D, $R_1$, $R_2$, $R_3$, $R_4$ und n die unter Formel (1) angegebenen Bedeutungen haben.

Die Amine der Formel (32) sind an sich bekannt und können in Analogie zu bekannten Verfahren hergestellt werden.

Die Kupplungskomponenten der Formel (33) werden z.B. hergestellt, indem man eine Verbindung der Formel

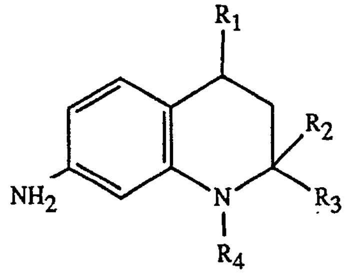

(34),

worin $R_1$, $R_2$, $R_3$ und $R_4$ die unter Formel (1) angegeben Bedeutungen haben, mit einer Verbindung der Formel

$$X-(CH_2)_n-\overset{O}{\overset{\|}{C}}-Y \quad (35),$$

worin X und Y je eine anionische Abgangsgruppe bedeuten und n die unter Formel (1) angegebenen Bedeutungen hat, zu einer Verbindung der Formel

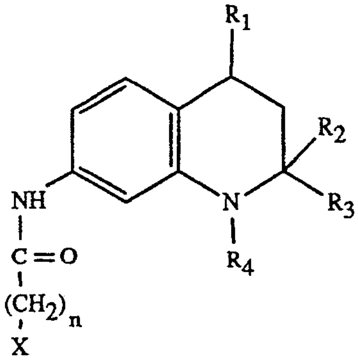

(36),

umsetzt, worin $R_1$, $R_2$, $R_3$, $R_4$ und n die unter Formel (1) angegebenen Bedeutungen und X die unter

Formel (35) angegebene Bedeutung hat, und die Verbindung der Formel (36) durch Austausch des Restes X durch eine Sulfogruppe zu einer Verbindung der Formel (33) umsetzt.

Als X und Y in Formel (35) kommen unabhängig voneinander z.B. Halogen, wie z.B. Fluor, Chlor oder Brom in Betracht. Insbesondere sind X und Y jeweils Chlor. Als Beispiele für Verbindungen der Formel (35) seien Chloressigsäurechlorid, 3-Chlorpropionsäurechlorid, 4-Chlorbuttersäurechlorid und 5-Valeriansäurechlorid genannt. Anstelle der Verbindung der Formel (35) können auch entsprechende Anhydride, wie z.B. Chloressigsäureanhydrid, verwendet werden.

Die Umsetzung der Verbindung der Formel (34) mit der Verbindung der Formel (35) kann in Wasser oder organischen Lösungsmitteln, wie z.B. Tetrahydrofuran, Dioxan oder Benzol, bei Temperaturen von -10 bis 80 °C, insbesondere bei Temperaturen von 0 bis 40 °C erfolgen.

Die Einführung der Sulfogruppe zur Verbindung der Formel (36) erfolgt durch Austausch des Restes X durch eine Sulfogruppe, wie z.B. mit $Na_2SO_3$, in einem Lösungsmittel, wie z.B. Wasser oder einer Wasser/Aethanolmischung, bei Temperaturen von 60 bis 100 °C, insbesondere bei Temperaturen von 85 bis 100 °C, bei saurem, neutralem bis alkalischem pH-Wert, insbesondere einem pH-Wert von 5 bis 9.

Werden in dem erfindungsgemässen Verfahren Farbstoffmischungen verwendet, so können diese durch Mischung der Einzelfarbstoffe hergestellt werden. Dieser Mischprozess erfolgt beispielsweise in geeigneten Mühlen, z.B. Kugel- und Stiftmühlen, sowie in Knetern oder Mixern.

Ferner können die Farbstoffmischungen der Farbstoffe durch Zerstäubungstrocknen der wässrigen Farbstoffmischungen hergestellt werden.

Die in dem erfindungsgemässen Verfahren verwendeten Farbstoffe liegen entweder in der Form ihrer freien Sulfonsäure oder vorzugsweise als deren Salze vor.

Als Salze kommen beispielsweise die Alkali-, Erdalkali- oder Ammoniumsalze oder die Salze eines organischen Amins in Betracht. Als Beispiele seien die Natrium-, Lithium-, Kalium- oder Ammoniumsalze oder das Salz des Triäthanolamins genannt.

Die in dem erfindungsgemässen Verfahren verwendeten Farbstoffe enthalten in der Regel weitere Zusätze wie z.B. Kochsalz oder Dextrin.

Das erfindungsgemässe Verfahren zum Trichromie-Färben oder -Bedrücken kann auf die üblichen Färbe- bzw. Druckverfahren angewendet werden. Die Färbeflotten oder Druckpasten können ausser Wasser und den Farbstoffen weitere Zusätze, beispielsweise Netzmittel, Antischaummittel, Egalisiermittel oder die Eigenschaft des Textilmaterials beeinflussende Mittel wie z.B. Weichmachungsmittel, Zusätze zum Flammfestausrüsten oder schmutz-, wasser- und öl-abweisende Mittel sowie wasserenthärtende Mittel und natürliche oder synthetische Verdicker, wie z.B. Alginate und Celluloseäther, enthalten.

Das erfindungsgemässe Verfahren ist besonders zum Färben aus Kurzflotten, wie z.B. bei Kontinuefärbeverfahren oder diskontinuierlichen und kontinuierlichen Schaumfärbeverfahren, geeignet.

Die in dem erfindungsgemässen Verfahren verwendeten Farbstoffe zeichnen sich beim Trichromie-Färben oder -Bedrucken durch gleichmässigen Farbaufbau, gutes Aufziehverhalten, guten Nuancenkonstanz auch in verschiedenen Konzentrationen, gute Echtheiten, z.B. gute Formaldehydbeständigkeit, sowie insbesondere durch sehr gute Kombinierbarkeit aus.

Das erfindungsgemässe Verfahren eignet sich zum Färben oder Bedrucken sowohl von natürlichen Polyamidmaterialien wie z.B. Wolle wie insbesondere von synthetischen Polyamidmaterialien wie z.B. Polyamid 6 oder Polyamid 6.6 und es ist geeignet zum Färben oder Bedrücken von Woll- und synthetischem Polyamid-Mischgeweben oder -Garnen.

Das genannte Textilmaterial kann dabei in den verschiedensten Verarbeitungsformen vorliegen, wie z.B. als Faser, Garn, Gewebe oder Gewirke und insbesondere in Form von Teppichen.

In den folgenden Beispielen stehen Teile für Gewichtsteile. Die Temperaturen sind in Celsiusgraden angegeben. Die Beziehung zwischen Gewichtsteilen und Volumenteilen ist dieselbe wie diejenige zwischen Gramm und Kubikzentimeter.

Beispiel 1:

Man färbt 10 Teile Polyamid-6.6 Fasermaterial (Helancatrikot) in 500 Teilen einer wässrigen Flotte, die 2 g/l Ammonacetat enthält und mit Essigsäure auf pH 5 gestellt wird. Als Farbstoffe werden 0,05 % des roten Farbstoffs der in Form der freien Säure der Formel

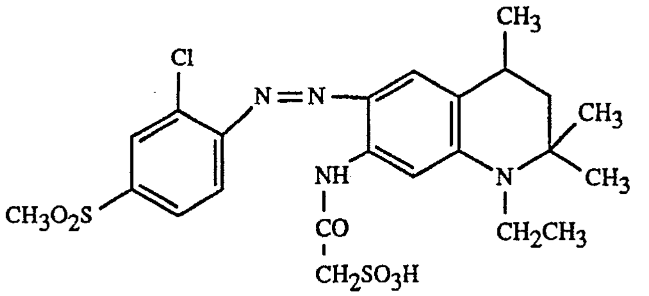

(101)

entspricht, 0,18 % des gelben Farbstoffs der in Form der freien Säure der Formel

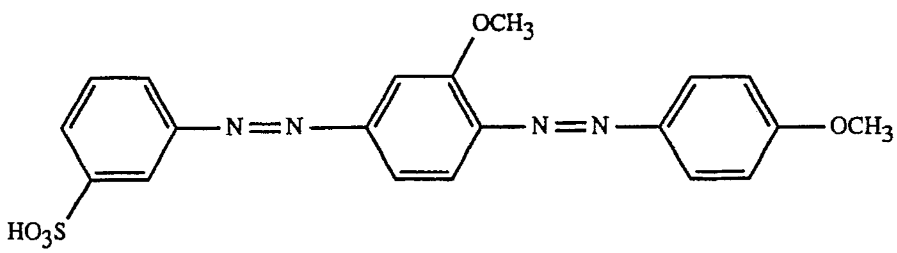

(102)

entspricht und 0,17 % des blauen Farbstoffs der in Form der freien Säure der Formel

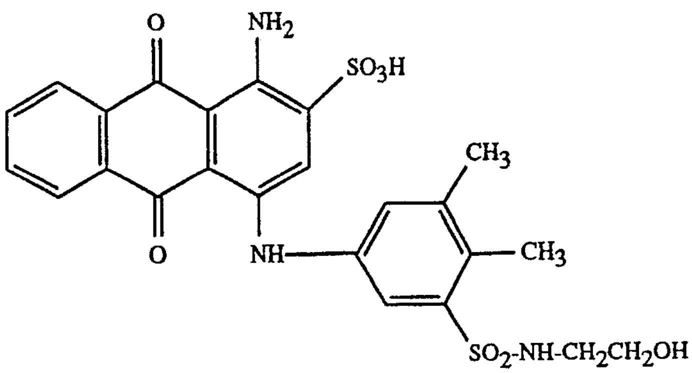

(103)

entspricht, verwendet, wobei sich die Mengenangaben auf das Fasergewicht beziehen.

Die Färbedauer bei einer Temperatur von 98° beträgt 30 bis 90 Minuten. Das gefärbte Polyamidfasermaterial wird anschliessend herausgenommen und wie üblich gespült und getrocknet. Man erhält ein in einem braunen Farbton völlig egal gefärbtes Gewebestück, das keinerlei materialbedingte Streifigkeit aufweist.

Beispiel 2:

Man färbt 10 Teile Polyamid 6.6-Garn in 400 Teilen einer wässrigen Flotte, die 1,5 g/l Ammonacetat enthält und mit Essigsäure auf pH 5,5 gestellt wird. Als Farbstoffe werden 0,1 % des Farbstoffs der in Form der freien Säure der Formel

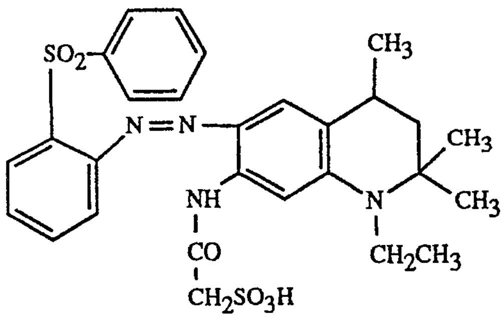

(104)

entspricht, 0,13 % des Farbstoffs der Formel (102) und 0,12 % des Farbstoffs der Formel (103) verwendet, wobei sich die Mengenangaben auf das Fasergewicht beziehen. Das Färbebad wird innerhalb von 30 Minuten auf 98° C erhitzt und 60 Minuten bei 96° bis 98° gehalten. Das gefärbte Garn wird anschliessend herausgenommen und wie üblich gespült und getrocknet. Man erhält ein in einem braunen Farbton gefärbtes Garn.

Beispiel 3:

Man färbt 10 Teile Polyamid 6.6-Teppichgarn in 400 Teilen einer wässrigen Flotte, die 1,5 g/l Ammonacetat enthält und mit Essigsäure auf pH 5,5 gestellt wird. Als Farbstoffe werden 0,15 % des roten Farbstoffs der Formel (101), 0,625 % des gelben Farbstoffs der in Form der freien Säure der Formel

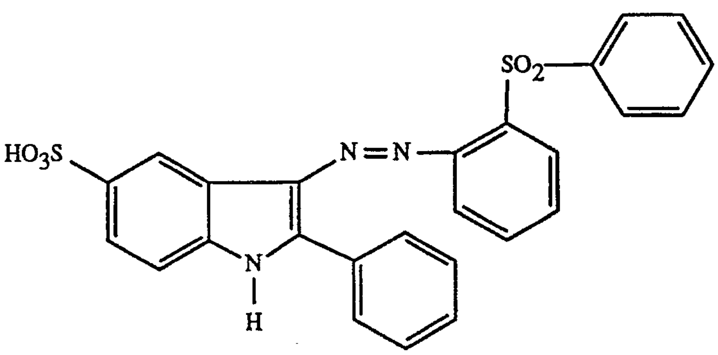

(105)

entspricht, und 0,52 % des blauen Farbstoffs der Formel (103) verwendet, wobei sich die Mengenangaben auf das Fasergewicht beziehen. Das Färbebad wird innerhalb von 30 Minuten auf 98° erhitzt und 60 Minuten bei 96° bis 98° gehalten. Das gefärbte Garn wird anschliessend herausgenommen und wie üblich gespült und getrocknet. Man erhält ein in einem braunen Farbton gefärbtes Garn.

Beispiel 4:

Wenn man wie in Beispiel 3 angegeben vorgeht, jedoch anstelle der Farbstoffe der Formeln (101), (105) und (103)
0,32 % des Farbstoffs der Formel (104),
0,46 % des Farbstoffs der Formel (105) und
0,61 % des Farbstoffs der Formel (103)
verwendet, so erhält man ebenfalls ein in einem braunen Farbton gefärbtes Garn.

Beispiel 5: (Teppichdruck)

Ein Verlours-Teppich aus Polyamid-6 mit einem Florgewicht von 400 g/m² wird für die Fondfärbung mit einer wässrigen Klotzflotte der nachstehenden Zusammensetzung
0,1 g/l Farbstoff der Formel (102),

0,1 g/l Farbstoff der Formel (103),
2 g/l Verdicker auf der Basis natürlicher Polysaccharide,
0,5 g/l Netzmittel auf der Basis eines sulfatierten Alkyl-Aryl-Polyglycolates, und
0,5 g/l Entschäumer auf der Basis hochsiedender Alkohole,
die mit Essigsäure auf den pH-Wert 4,5 eingestellt ist, foulardiert und auf 80 % der Flottenaufnahme abgequetscht. Auf den so vorbehandelten Teppich wird über eine Druckschablone ein Muster mit der nachstehenden wässrigen Druckpaste aufgebracht:
1 g/l Farbstoff der Formel (102),
20 g/l Farbstoff der Formel (101),
10 g/l Farbstoff der Formel (103),
15 g/l Verdicker auf der Basis natürlicher Polysaccharide,
2 g/l Netzmittel auf der Basis eines sulfatierten Alkyl-Aryl-Polyglycolates,
1 g/l Entschäumer auf der Basis hochsiedender Alkohole.
Die Druckpaste ist mit Essigsäure auf pH-Wert 4,5 gestellt.

Das bedruckte Material wird anschliessend während 5 Minuten mit Sattdampf von 101° behandelt zur Fixierung der Farbstoffe, gespült, neutralisiert, erneut gespült und getrocknet.

Man erhält einen Verlours-Teppich mit bordeaux-farbigem Muster auf blassolivem Untergrund mit sehr scharfen Konturen, welcher eine gute Penetration und keinerlei "Frosting" aufweist.

Beispiel 6: (Teppich-Kontinue-Färbung)

2,7 Teile des gelben Farbstoffes der Formel (105), 1,2 Teile des roten Farbstoffes der Formel (104) und 1,3 Teile des blauen Farbstoffes der Formel (103) werden in 100 Teilen Wasser durch kurzes Kochen gelöst. Diese Lösung wird hierauf zu einer Lösung, enthaltend 3 Teile eines Verdickungsmittels auf der Basis von Johannisbrotkernmehl, 5,0 Teile eines koazervatbildenden Klotzhilfsmittels auf der Basis eines Kondensationsproduktes einer höher molekularen Fettsäure mit einem Oxyalkylamin, 2,0 Teilen krist. Mononatriumphosphat und 1,0 Teile krist. Dinatriumphosphat in 500 Teilen kaltem Wasser zugegeben. Anschliessend wird mit kaltem Wasser auf 1000 Teile aufgefrnllt. Von dieser, einen pH-Wert von 5,5 bis 6,5 aufweisenden Flotte werden 300 %, bezogen auf das Teppichgewicht, auf einen Polyamid-6.6-Nadelflor-Rohteppich aufgetragen, bei einer Teppichgeschwindigkeit von 8 Meter pro Minute. Der getränkte Teppich gelangt in einen Schleifendämpfer, wo er während 10 Minuten mit Sattdampf von 98 bis 100° behandelt wird.

Nach dem Waschen in einer Breitwaschmaschine erhält man einen in einem neutral braunen Farbton gefärbten Teppich.

Beispiel 7:

Verfährt man wie in Beispiel 6 angegeben und verwendet bei sonst gleicher Verfahrensweise anstelle von 1,2 Teilen des roten Farbstoffs der Formel (104) 1,2 Teile des roten Farbstoffes der Formel (101), so erhält man einen in einem braunen Farbton gefärbten Teppich.

Wenn man wie in den Beispielen 3 bis 7 angegeben verfährt, jedoch anstelle des rotfärbenden Farbstoffes der Formel (101) eine äquimolare Menge des Farbstoffes, der in Form der freien Säure der Formel

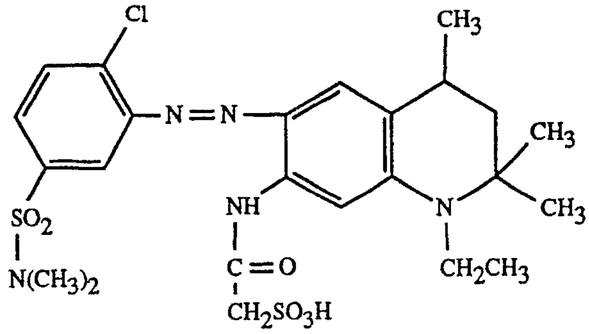

(106)

.

entspricht, verwendet, so erhält man gleich gute Ergebnisse.

Wenn man wie in Beispiel 1 angegeben verfährt und anstelle der in Beispiel 1 genannten Kombination der Farbstoffe der Formeln (101), (102) und (103) die in der folgenden Tabelle angegebene Kombination von Farbstoffen in Mengen gleicher Farbstärke verwendet, so erhält man ebenfalls in gleichmässig brauner Nuance gefärbte Gewebestücke.

Als rotfärbender Farbstoff wird in der folgenden Tabelle der Farbstoff der Formel (106) verwendet.

<u>Tabelle</u>

| gelb- bzw. orangefärbende Komponente | blaufärbende Komponente |
|---|---|
| 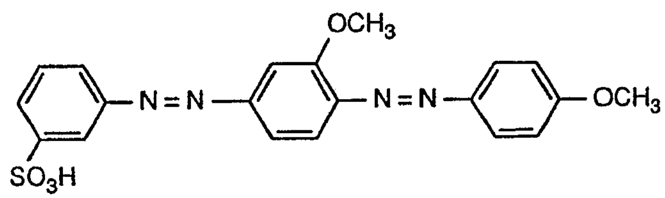 (102) | 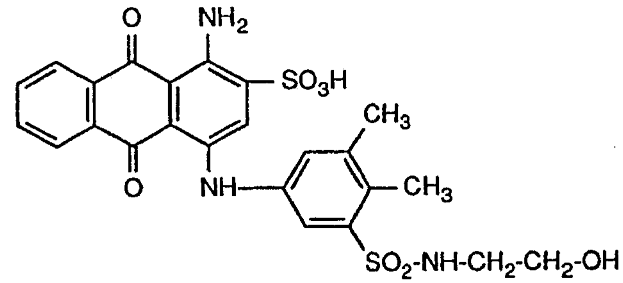 (103) |
| 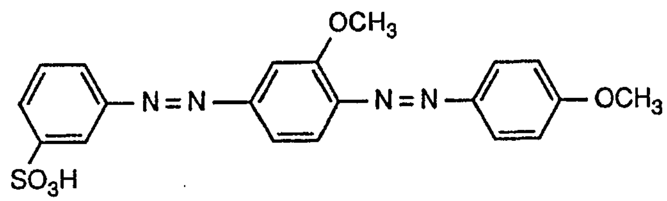 (102) | 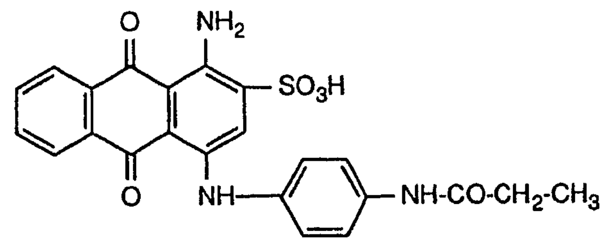 (107) |
| 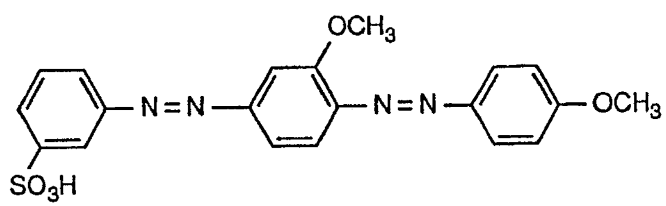 (102) | 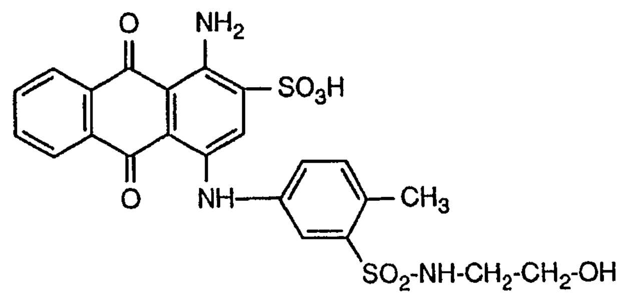 (108) |

Tabelle

| gelb- bzw. orangefärbende Komponente | blaufärbende Komponente |
|---|---|
| 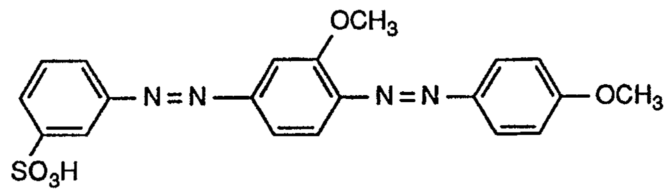 (102) | 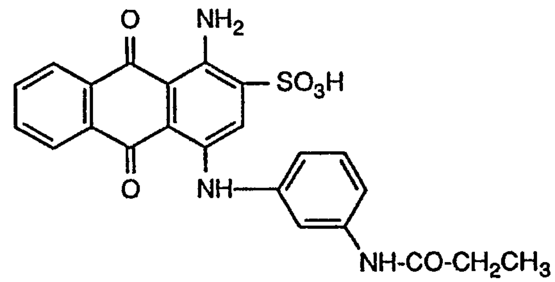 (109) |
| 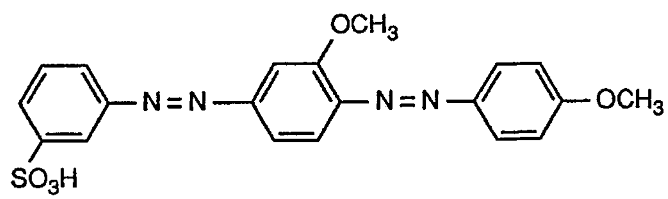 (102) | 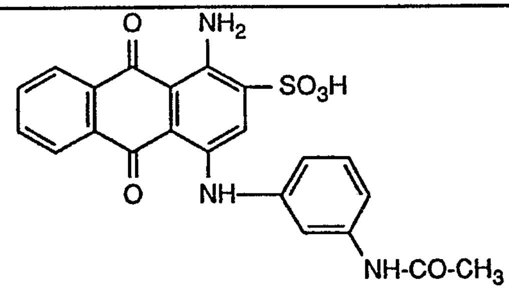 (110) |
| 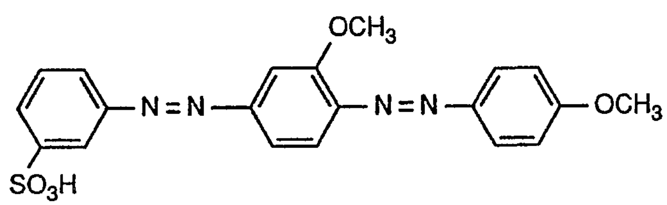 (102) | 1:1-Mischung der Farbstoffe der Formeln (103) und (107) |

Tabelle

| gelb- bzw. orangefärbende Komponente | blaufärbende Komponente |
|---|---|
| 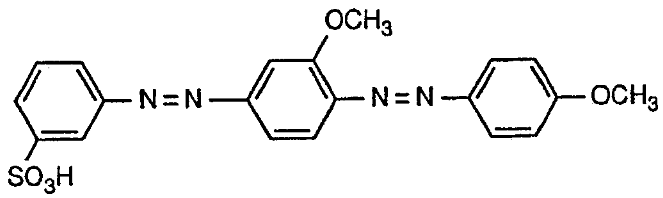 (102) | 1:1-Mischung der Farbstoffe der Formeln (103) und (109) |
| 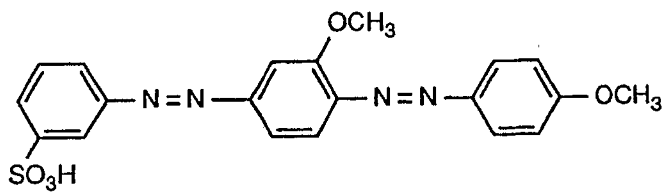 (102) | 1:1-Mischung der Farbstoffe der Formeln (108) und (107) |
| 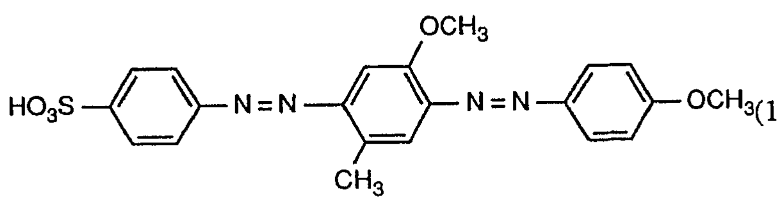 (111) | 1:1-Mischung der Farbstoffe der Formeln (108) und (109) |

Tabelle

| gelb- bzw. orangefärbende Komponente | blaufärbende Komponente |
|---|---|
| 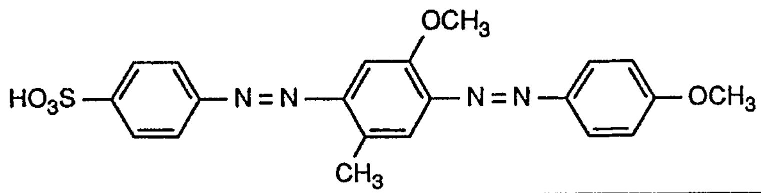 (111) | 1:1-Mischung der Farbstoffe der Formeln (108) und (110) |
| 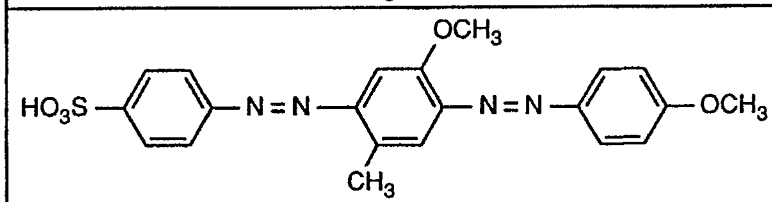 (111) | Farbstoff der Formel (110) |
| 70:30-Mischung der Farbstoffe der Formeln (102) und 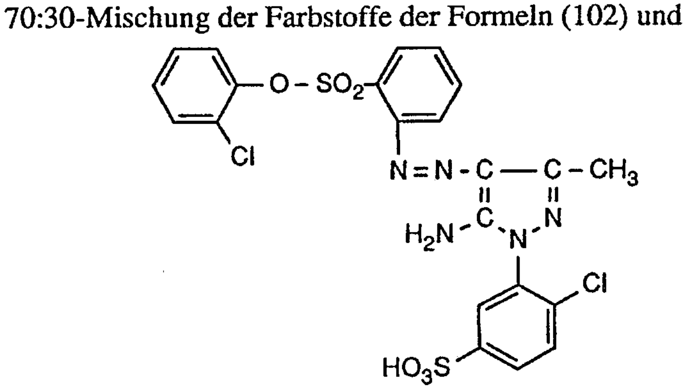 (112) | Farbstoff der Formel (103) |
| 1:1:1-Mischung der Farbstoffe der Formeln (102), (111) und (112) | 1:1-Mischung der Farbstoffe der Formeln (103) und (109) |
| Farbstoff der Formel (110) | Farbstoff der Formel (103) |

Herstellungsbeispiel für die Verbindung der Formel (101)

Bei Raumtemperatur werden 91,4 Teile 7-Amino-1-äthyl-1,2,3,4-tetrahyro-2,2,4-trimethylchinolin in 285

Teilen Tetrahydrofuran gelöst und unter Rühren 106,6 Teile wasserfreies Natriumacetat innerhalb von 2 Minuten eingetragen.

Innerhalb 30 Minuten werden danach 64,2 Teile Chloracetylchlorid unter Eiskühlung bei einer Innentemperatur von 20° zugetropft. Es wird 1 Stunde bei 20° gerührt und danach 250 Teile Wasser zugetropft. Man rührt 10 Minuten bei 20° nach, trennt danach die wässrige Phase ab und schüttelt die organische Phase einmal mit 100 Teilen 15%-iger wässriger Natriumchlorid-Lösung aus. Die organische Phase wird anschliessend über Natriumsulfat getrocknet und das Rohprodukt durch Einengen der Lösung am Rotationsverdampfer gewonnen. Man erhält 133,1 Teile eines grauen Pulvers der Formel

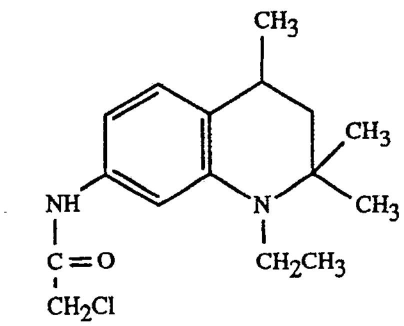

(1001).

Bei Raumtemperatur werden 133,1 Teile der Verbindung der Formel (1001) unter Rühren in 600 Teilen Wasser eingetragen. Anschliessend wird der pH-Wert durch Zugabe von 30%-iger wässriger Natronlauge auf 7 gestellt und 65 Teile Natriumsulfit eingetragen. Danach wird die Temperatur auf ca. 95° erhöht und 4 Stunden bei 93 bis 95° gerührt. Anschliessend lässt man auf 70° abkühlen und streut innerhalb 3 Minuten 105 Teile Natriumchlorid ein. Danach rührt man ohne zu heizen 1 Stunde nach, kühlt auf 15° ab und filtriert. Das abfiltrierte Rohprodukt wird 12 Stunden im Vakuum bei 60° getrocknet und anschliessend in 275 Teile absoluten Essigester eingerührt. Nach 15 Minuten Rühren wird das Produkt über eine Nutsche abgesaugt, mit 50 Teilen absolutem Essigester nachgewaschen und an der Luft getrocknet.

Man erhält 186 Teile eines grauen Pulvers der Formel

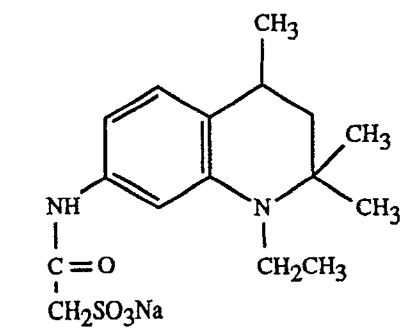

(1002).

Bei ca. 10° werden 40 Teile Essigsäure (80 %) und 4 Teile Salzsäure (32 %) unter Rühren vorgelegt. Danach werden 2,1 Teile 4-Amino-3-chlor-phenylmethylsulfon eingetragen und die Temperatur auf 0° gesenkt. Danach wird innerhalb von 1 Minute eine Lösung aus 0,74 Teilen $NaNO_2$ in 3 Teilen Wasser zugegeben und bei 0 bis 3° diazotiert und 45 Minuten nachgerührt, wobei die Temperatur 0 bis 3° beträgt. Danach gibt man 1 Teil Sulfaminsäure zu, rührt kurz nach und gibt anschliessend 3,65 Teile der Kupplungskomponente der Formel (1002) innerhalb 1 Minute zu. Man rührt 30 Minuten bei 0 bis 3° nach und gibt daraufhin innerhalb 15 Minuten 15 Teile Natriumacetat x $3H_2O$ in 3 Portionen zu. Nach weiteren 30 Minuten Rühren bei 0 bis 3° wird innerhalb 30 Minuten eine Lösung aus 6 Teilen Natriumacetat, 3 Teilen Soda und 30 Teilen Wasser zugegeben, wobei sich die Reaktionsmischung nicht auf mehr als 20° erwärmt. Anschliessend gibt man innerhalb von 10 Minuten 100 Teile einer 15%-igen wässrigen Natriumchlorid-Lösung zu, filtriert den erhaltenen Farbstoff ab und trocknet im Vakuum bei 50°. Man erhält 6 Teile eines rötlichen Pulvers, das einer Verbindung der Formel (101) entspricht. Der erhaltene Farbstoff färbt natürliches und synthetisches Polyamidfasermaterial in roten Farbtönen.

**Ansprüche**

1. Verfahren zum Trichromie-Färben oder Bedrücken von natürlichen und synthetischen Polyamidfasermaterialien, dadurch gekennzeichnet, dass man mindestens einen roten Farbstoff der Formel

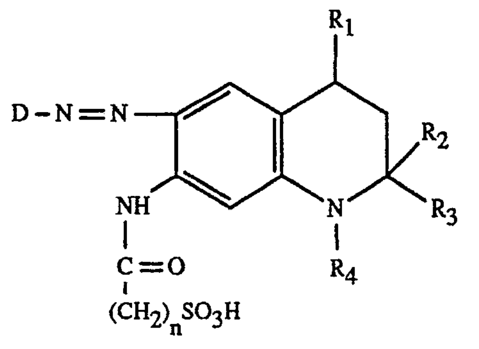

(1),

worin D eine Diazokomponente der Benzol- oder Naphthalinreihe, $R_1$, $R_2$, $R_3$ und $R_4$ unabhängig voneinander Wasserstoff oder gegebenenfalls substituiertes $C_1$-$C_8$-Alkyl und n die Zahl 1, 2, 3, 4 oder 5 ist, zusammen mit mindestens einem gelben oder orangen Farbstoff der Formeln

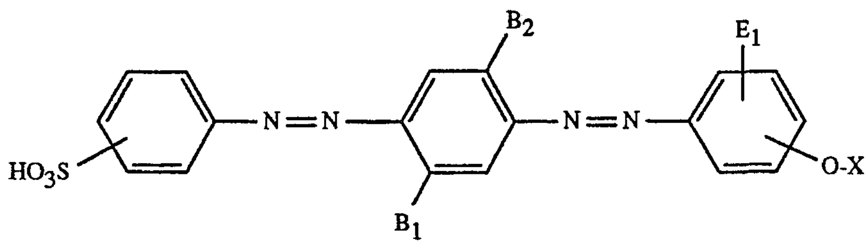

(2),

worin $B_1$, $B_2$ und $E_1$ Wasserstoff, $C_{1-4}$-Alkyl oder $C_{1-4}$-Alkoxy und X geradkettiges oder verzweigtes $C_{1-4}$-Alkyl oder geradkettiges oder verzweigtes $C_{2-4}$-Hydroxyalkyl bedeuten, oder

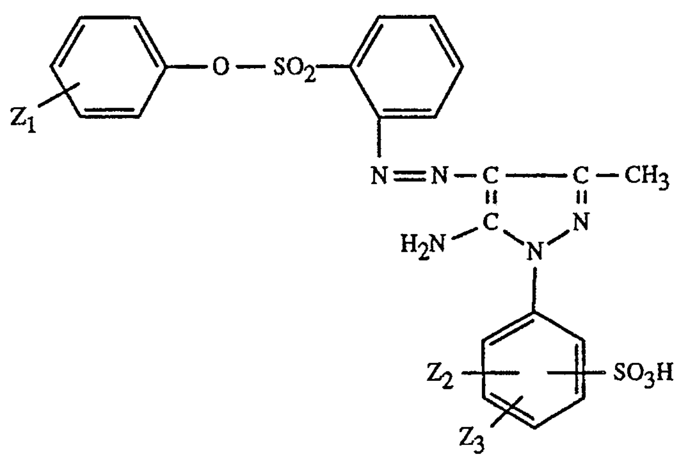

(3),

worin $Z_1$, $Z_2$ und $Z_3$ unabhängig voneinander Wasserstoff, Halogen, $C_{1-4}$-Alkyl oder $C_{1-4}$-Alkoxy bedeuten, oder Mischungen von Farbstoffen der Formeln (2) und (3), oder einem gelben Farbstoff der Formel

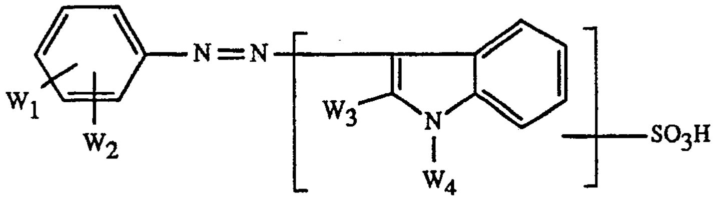

(4),

worin $W_1$ Wasserstoff, $C_{1-4}$-Alkyl, $C_{1-4}$-Alkoxy, Halogen, $C_{2-4}$-Alkanoylamino oder ein gegebenenfalls substituierter Arylsulfonyl-, Aryloxy- oder Arylcarbonylrest, $W_2$ Wasserstoff, Halogen, ein gegebenenfalls substituierter Alkyl, Aryloxy- oder Aryloxysulfonylrest oder ein Rest der Formel

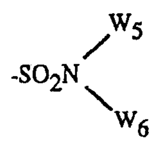 oder 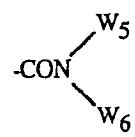 ,

$W_3$ ein gegebenenfalls substituierter Alkyl- oder Arylrest, $W_4$ Wasserstoff oder Alkyl und $W_5$ und $W_6$ unabhängig voneinander Wasserstoff oder ein gegebenenfalls substituierter Alkyl-, Cycloalkyl- oder Arylrest ist, oder Mischungen von Farbstoffen der Formeln (2), (3) und (4) und mindestens einem blauen Farbstoff der Formel

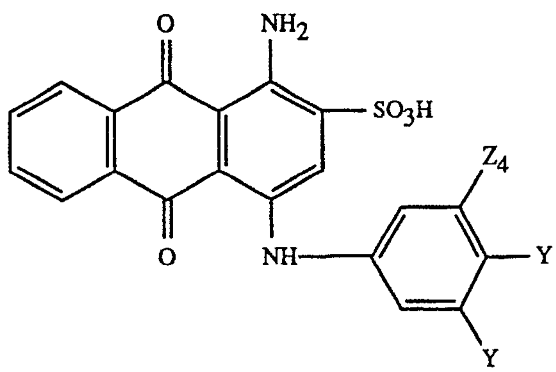

(5),

worin ein Y Wasserstoff oder Methyl und das andere Y $C_{2-4}$-Alkanoylamino oder $C_2$-$C_4$-Hydroxyalkylsulphamoyl bedeutet und $Z_4$ Wasserstoff oder Methyl ist, verwendet.

2. Verfahren gemäss Anspruch 1, dadurch gekennzeichnet, dass man als roten Farbstoff einen Farbstoff der Formel

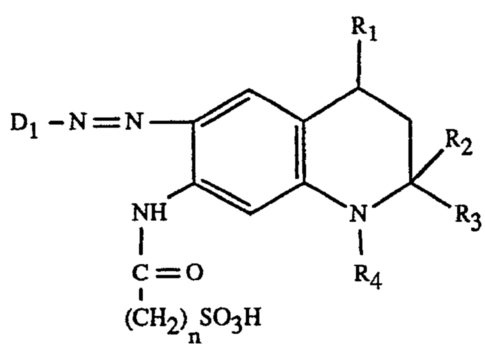

(6),

worin $D_1$ Phenyl oder Naphthyl ist, wobei jeder Rest substituiert sein kann durch $C_1$-$C_8$-Alkyl, $C_1$-$C_8$-Alkoxy, $C_2$-$C_8$-Alkanoylamino, $C_2$-$C_8$-Alkoxycarbonylamino, $C_2$-$C_8$-Alkanoyl, $C_5$-$C_7$-Cycloalkylcarbonyl, im Cycloalkylring durch $C_1$-$C_4$-Alkyl, Halogen, Sulfo oder Sulfato substituiertes $C_5$-$C_7$-Cycloalkylcarbonyl, Benzoyl, im Phenylring durch $C_1$-$C_4$-Alkyl, Halogen, Sulfo oder Sulfato substituiertes Benzoyl, Benzthiazol, Benzoxazol,

durch $C_1$-$C_4$-Alkyl, Halogen, Sulfo oder Sulfato substituiertes Benzthiazol oder Benzoxazol, Benzoylamino, Amino, Mono- oder Dialkylamino mit 1 bis 8 Kohlenstoffatomen im Alkylrest, Phenylamino, $C_2$-$C_8$-Alkoxycarbonyl, Nitro, Cyan, Trifluormethyl, Halogen, Sulfamoyl, am Stickstoffatom ein- oder zweifach durch $C_1$-$C_4$-Alkyl, $C_5$-$C_7$-Cycloalkyl oder Phenyl substituiertes Sulfamoyl, Carbamoyl, Ureido, Hydroxy, $C_1$-$C_8$-Alkylsulfonyl, Phenylsulfonyl, im Phenylring durch $C_1$-$C_4$-Alkyl, Halogen, Sulfo oder Sulfato substituiertes Phenylsulfonyl, Carboxy, Sulfomethyl, Sulfo, Sulfato, Thiosulfato und Phenylazo- und Naphthylazogruppen, und gegebenenfalls je 2 benachbarte Substituenten der genannten Ringsysteme weitere ankondensierte Phenylringe oder Cyclohexylringe bilden können und $R_1$, $R_2$, $R_3$, $R_4$ und n die unter Formel (1) angegebenen Bedeutungen haben, vorzugsweise worin jeder der für $D_1$ oben genannten Reste substituiert sein kann durch $C_1$-$C_8$-Alkyl, $C_1$-$C_8$-Alkoxy, $C_2$-$C_8$-Alkanoylamino, $C_2$-$C_8$-Alkoxycarbonylamino, $C_2$-$C_8$-Alkoxycarbonylamino, $C_2$-$C_8$-Alkanoyl, $C_5$-$C_7$-Cycloalkylcarbonyl, im Cycloalkylring durch $C_1$-$C_4$-Alkyl oder Halogen substituiertes $C_5$-$C_7$-Cycloalkylcarbonyl, Benzoyl, im Phenylring durch $C_1$-$C_4$-Alkyl oder Halogen substituiertes Benzoyl, Benzthiazol, Benzoxazol, Benzoylamino, Amino, Mono- oder Dialkylamino mit 1 bis 8 Kohlenstoffatomen im Alkylrest, Phenylamino, $C_2$-$C_8$-Alkoxycarbonyl, Nitro, Cyan, Trifluormethyl, Halogen, Sulfamoyl, am Stickstoffatom ein- oder zweifach durch $C_1$-$C_4$-Alkyl, $C_5$-$C_7$-Cycloalkyl oder Phenyl substituiertes Sulfamoyl, Carbamoyl, Ureido, Hydroxy, $C_1$-$C_8$-Alkylsulfonyl, Phenylsulfonyl, im Phenylring durch $C_1$-$C_4$-Alkyl und/oder Halogen substituiertes Phenylsulfonyl, Carboxy, Sulfomethyl, Sulfo, Sulfato, Thiosulfato und Phenylazo- und Naphthylazogruppen, und gegebenenfalls je 2 benachbarte Substituenten der genannten Ring systeme weitere ankondensierte Phenylringe oder Cyclohexylringe bilden können und $R_1$, $R_2$, $R_3$, $R_4$ und n die unter Formel (1) angegebenen Bedeutungen haben, verwendet.

3. Verfahren gemäss einem der Ansprüche 1 und 2, dadurch gekennzeichnet, dass man als roten Farbstoff einen Farbstoff der Formel

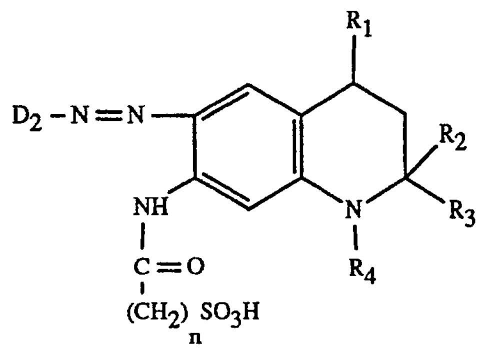

(7),

worin $D_2$ Phenyl ist, welches substituiert sein kann durch $C_1$-$C_8$-Alkyl, $C_2$-$C_8$-Alkanoyl, $C_2$-$C_8$-Alkoxycarbonyl, $C_5$-$C_7$-Cycloalkylcarbonyl, Benzoyl, im Phenylring durch $C_1$-$C_4$-Alkyl, Halogen, Sulfo oder Sulfato substituiertes Benzoyl, Benzthiazol, Benzoxazol, durch $C_1$-$C_4$-Alkyl, Halogen, Sulfo oder Sulfato substituiertes Benzthiazol oder Benzoxazol, Halogen, Phenylsulfonyl, im Phenylring durch $C_1$-$C_4$-Alkyl, Halogen, Sulfo oder Sulfato substituiertes Phenylsulfonyl, $C_1$-$C_8$-Alkylsulfonyl, am Stickstoffatom ein- oder zweifach durch $C_1$-$C_4$-Alkyl, $C_5$-$C_7$-Cycloalkyl oder Phenyl substituiertes Sulfamoyl und $R_1$, $R_2$, $R_3$, $R_4$ und n die unter Formel (1) angegebenen Bedeutungen haben, vorzugsweise worin der oben für $D_2$ genannte Rest substituiert sein kann durch $C_1$-$C_8$-Alkyl, $C_2$-$C_8$-Alkanoyl, $C_2$-$C_8$-Alkoxycarbonyl, $C_5$-$C_7$-Cycloalkylcarbonyl, $C_1$-$C_4$-Alkylsufonyl, Benzoyl, im Phenylring durch $C_1$-$C_4$-Alkyl oder Halogen substituiertes Benzoyl, Benzthiazol, Benzoxazol, Halogen, Phenylsulfonyl, im Phenylring durch $C_1$-$C_4$-Alkyl oder Halogen substituiertes Phenylsulfonyl, durch $C_1$-$C_8$-Alkyl, $C_5$-$C_7$-Cycloalkyl oder Phenyl substituiertes Sulfamoyl und $R_1$, $R_2$, $R_3$, $R_4$ und n die unter Formel (1) angegebenen Bedeutungen haben, verwendet.

4. Verfahren gemäss Anspruch 3, dadurch gekennzeichnet, dass man einen Farbstoff der Formel (7) verwendet, worin der für $D_2$ genannte Rest substituiert sein kann durch $C_1$-$C_8$-Alkyl, $C_2$-$C_8$-Alkanoyl, $C_2$-$C_8$-Alkoxycarbonyl, $C_5$-$C_7$-Cycloalkylcarbonyl, Benzoyl, im Phenylring durch $C_1$-$C_4$-Alkyl oder Halogen substituiertes Benzoyl, Benzthiazol, Benzoxazol, Halogen, Phenylsulfonyl, im Phenylring durch $C_1$-$C_4$-Alkyl oder Halogen substituiertes Phenylsulfonyl, $C_1$-$C_8$-Alkylsulfonyl, am Stickstoffatom ein-oder zweifach durch $C_1$-$C_4$-Alkyl, $C_5$-$C_7$-Cycloalkyl oder Phenyl substituiertes Sulfamoyl.

5. Verfahren gemäss einem der Ansprüche 1 bis 3, dadurch gekennzeichnet, dass man einen roten Farbstoff verwendet, worin $R_1$ Wasserstoff oder $C_1$-$C_4$-Alkyl, insbesondere Methyl, $R_2$ und $R_3$ unabhängig voneinander Wasserstoff oder $C_1$-$C_4$-Alkyl, insbesondere Methyl, $R_4$ $C_1$-$C_4$-Alkyl, insbesondere Aethyl, n die Zahl 1 oder 2 ist.

6. Verfahren gemäss einem der Ansprüche 1 bis 5, dadurch gekennzeichnet, dass man einen roten Farbstoff gemäss einem der Ansprüche 1 bis 5 als gelben oder orangen Farbstoff einen Farbstoff der Formel

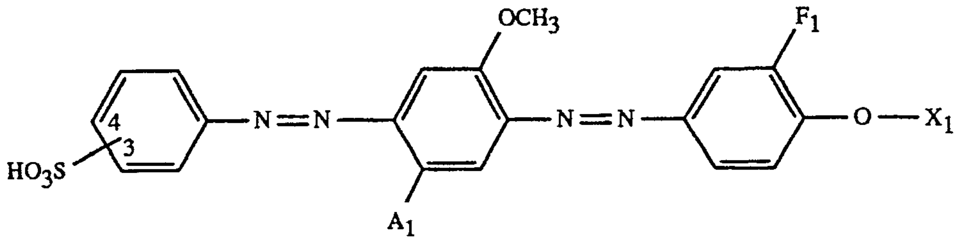

(8),

worin $A_1$ Wasserstoff oder Methyl, $F_1$ Wasserstoff oder Methyl und $X_1$ Methyl, Aethyl, β-Hydroxyäthyl, β-Hydroxypropyl, β-Hydroxybutyl oder α-Aethyl-β-hydroxyäthyl ist, und die Sulfogruppe in 3- oder 4-Stellung gebunden ist, oder eine Mischung aus mindestens einem Farbstoff der Formel (8) und einem gelben Farbstoff der Formel

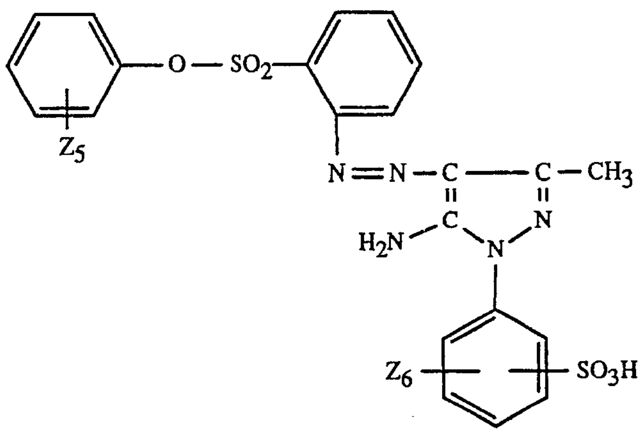

(9),

worin $Z_5$ und $Z_6$ unabhängig voneinander Wasserstoff, Methyl oder Chlor bedeuten, oder einen gelben Farbstoff der Formel

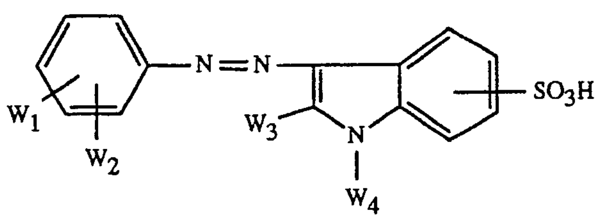

(10),

worin $W_1$ Wasserstoff, Methyl, Chlor, Methoxy, Aethoxy, o-Methylphenoxy, Phenoxy, Acetylamino, Phenylsulfonyl, p-Methylphenylsulfonyl, p-Chlorphenylsulfonyl, Naphthylsulfonyl, p-Methylbenzoyl oder p-Chlorbenzoyl, $W_2$ Wasserstoff, Chlor, Methyl, Trifluormethyl, o-Methylphenoxy, o-Chlorphenoxy, o-Chlorphenoxysulfonyl, $-SO_2NH_2$, N-$C_{1-2}$-Alkylaminosulfonyl, N,N-dimethylaminosulfonyl, N-Methyl-N-β-hydroxyäthylaminosulfonyl, N-Methyl-N-cyclohexylaminosulfonyl, N-Phenylaminosulfonyl, N-o-Methylphenylaminosulfonyl, N-o-Chlorphenylaminosulfonyl, N-m-Trifluormethylphenylaminosulfonyl, N-Aethyl-N-phenylaminosulfonyl, $-CONH_2$ oder $-CON(CH_3)_2$, $W_3$ Methyl oder Phenyl und $W_4$ Wasserstoff, Methyl, Aethyl oder Octyl ist, oder eine Mischung aus mindestens einem Farbstoff der Formel (8) und einem Farbstoff der Formel (10); zusammen mit mindestens einem blauen Farbstoff der Formel

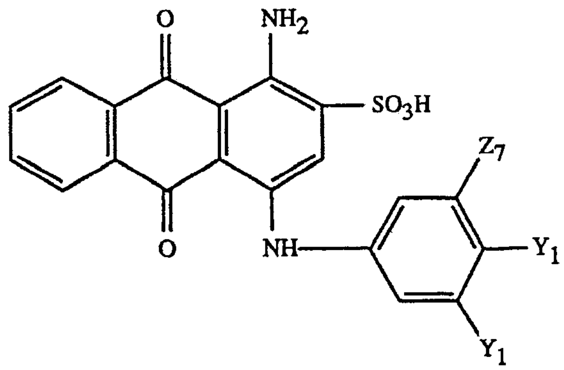

(11),

worin ein $Y_1$ Wasserstoff oder Methyl und das andere $Y_1$ Acetylamino, Propionylamino oder $C_{2-4}$-Hydroxyalkylsulphamoyl und $Z_7$ Wasserstoff oder Methyl ist, oder eine Mischung der blauen Farbstoffe der Formeln

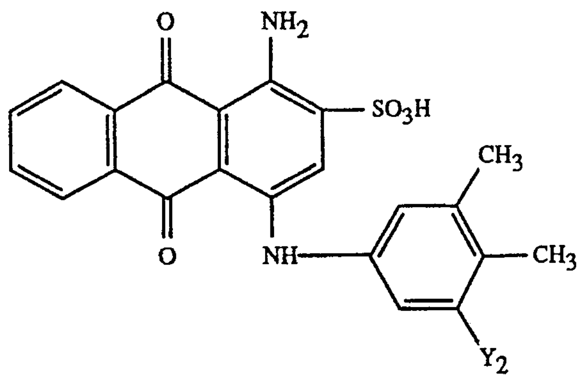

(12),

worin $Y_2$ ein $C_{2-4}$-Hydroxyalkylsulphamoylrest ist, und

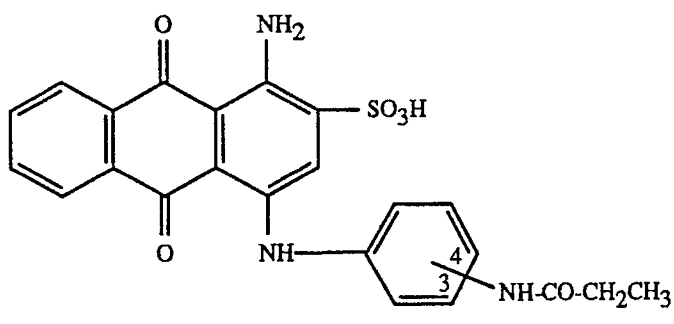

(13)

worin der Rest $-NH-CO-CH_2CH_3$ in 3- oder 4-Stellung gebunden ist, verwendet.

7. Verfahren gemäss einem der Ansprüche 1 bis 6, dadurch gekennzeichnet, dass man als roten Farbstoff einen Farbstoff der Formel

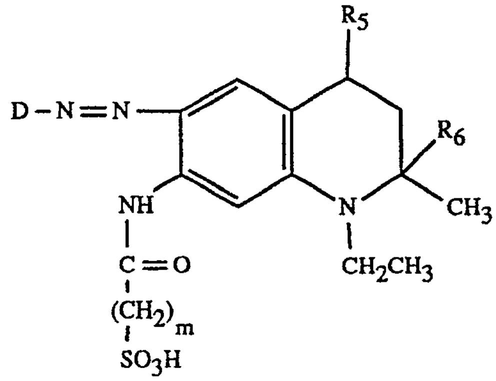

(14),

worin $R_5$ und $R_6$ unabhängig voneinander Wasserstoff oder Methyl, m die Zahl 1 oder 2 ist und D die in Anspruch 1 angegebenen Bedeutungen hat, insbesondere worin D die für $D_1$ in Anspruch 2 oder die für $D_2$ in Anspruch 3 angegebene Bedeutungen hat, verwendet.

8. Verfahren gemäss einem der Ansprüche 1 bis 7, dadurch gekennzeichnet, dass man einen roten Farbstoff der Formel

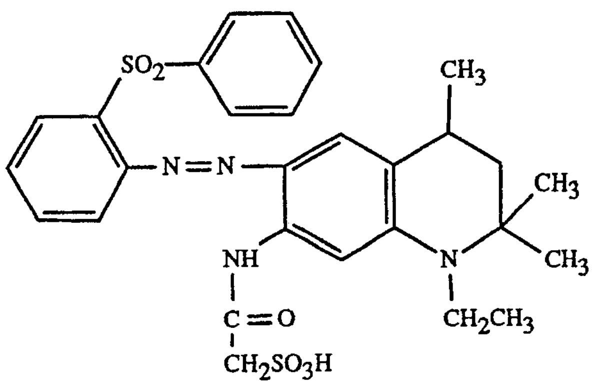

(15),

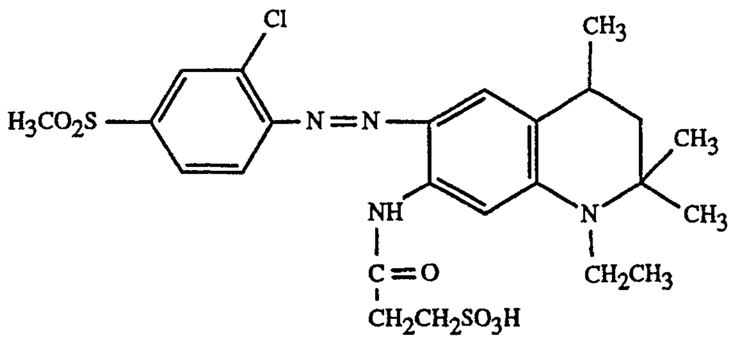

(16),

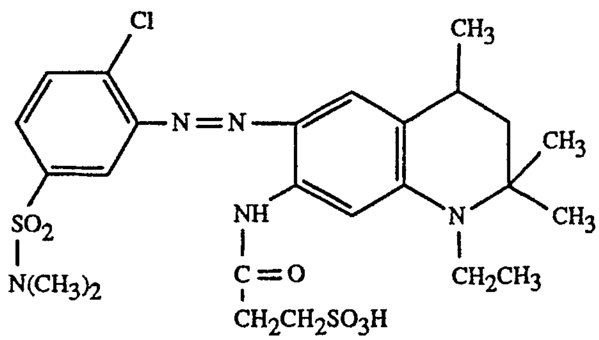

(17),

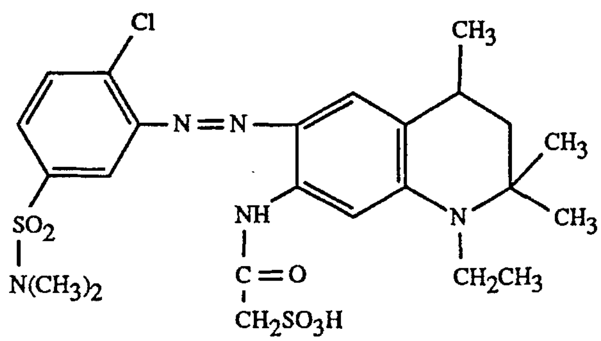

(18),

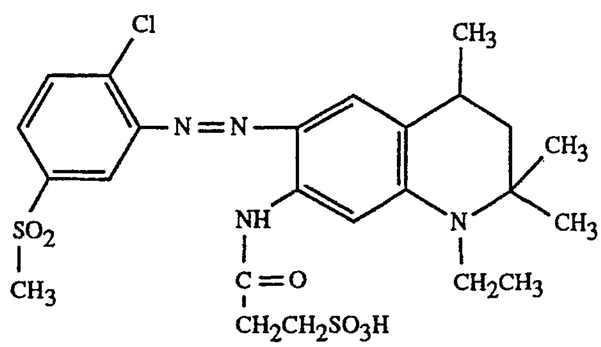

(19),

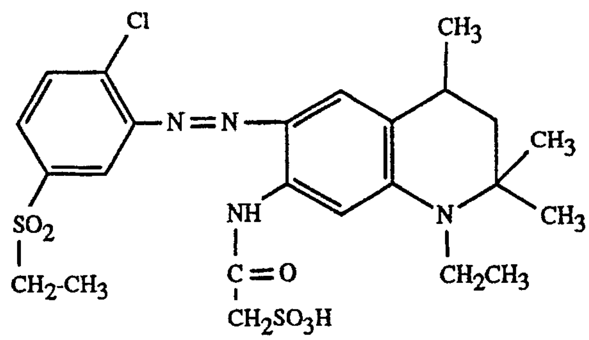

(20),

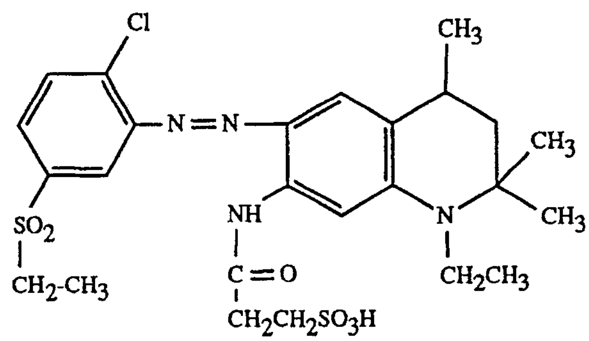

(21) oder

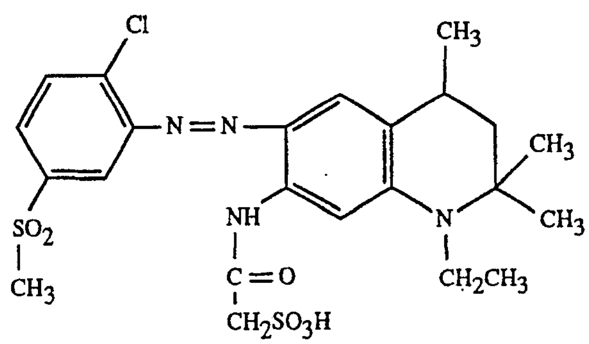

(22)

zusammen mit dem gelben Farbstoff der Formel

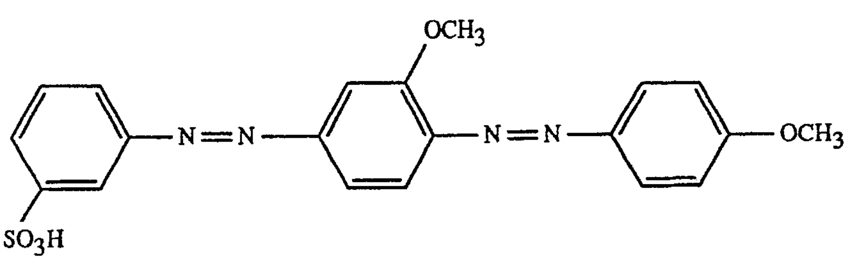

(23),

oder dem orangen Farbstoff der Formel

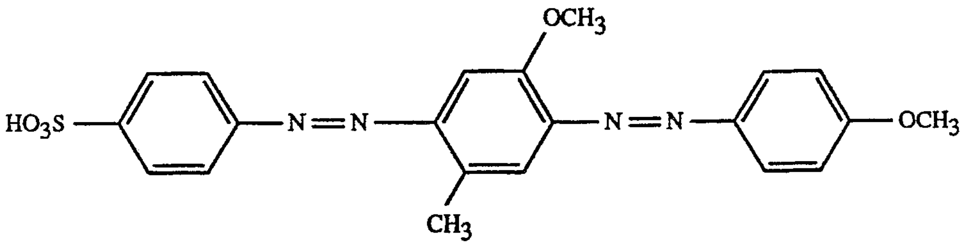 (24)

oder einer Mischung des gelben Farbstoffes der Formel (23) mit dem orangen Farbstoff der Formel (24), oder einer Mischung der Farbstoffe der Formeln (23) und/oder (24) mit dem Farbstoff der Formel

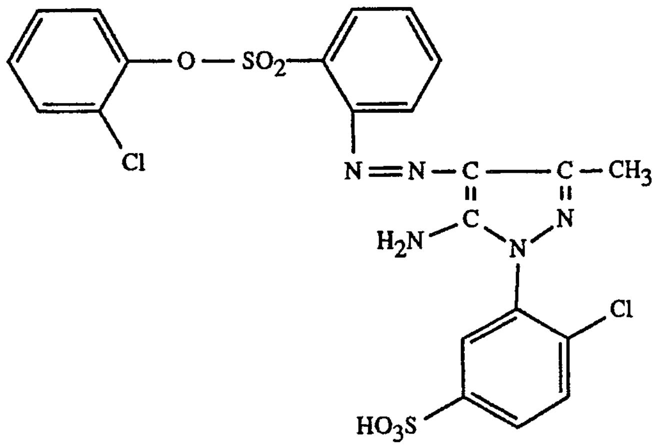 (25),

wobei das Gewichtsverhältnis der Farbstoffe der Formeln (23) und (24) 60:40 bis 40:60 und insbesondere 1:1 und das Gewichtsverhältnis der Farbstoffe der Formeln (23) oder (24) und (25) 80:20 bis 20:80 und insbesondere 70:30 ist, und das Gewichtsverhältnis der Farbstoffe der Formeln (23), (24) und (25) 60:20:20,20:60:20 bis 20:20:60 und insbesondere 1:1:1 ist, oder dem gelben Farbstoff der Formel

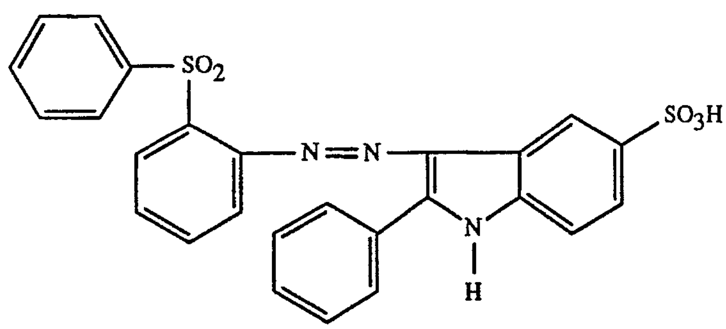 (26)

und mindestens einem der blauen Farbstoffe der Formeln

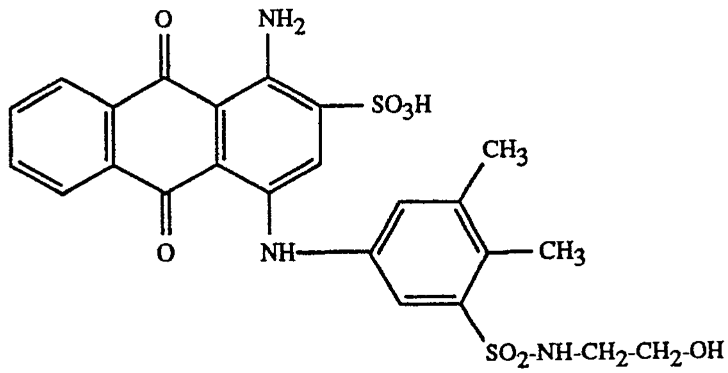

(27),

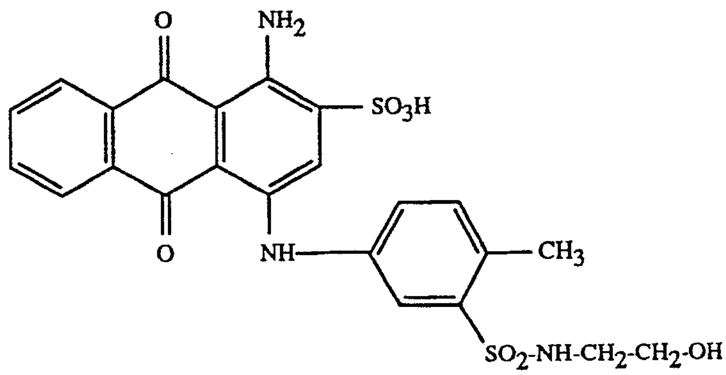

(28),

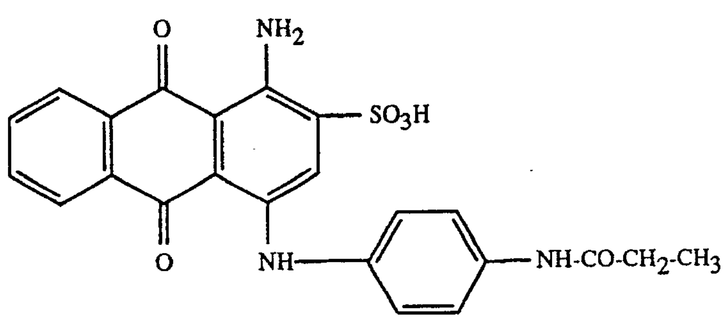

(29),

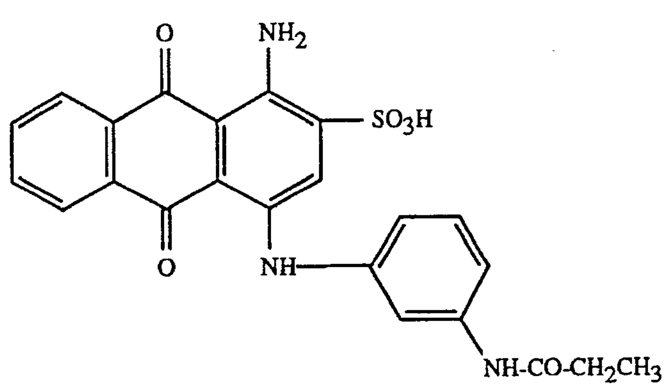

(30),

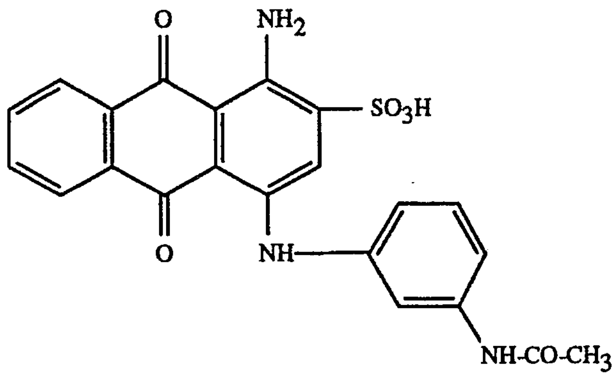

(31),

oder eine Mischung eines Farbstoffs der Formeln (27) oder (28) mit einem Farbstoff der Formeln (29), (30) oder (31) verwendet.

9. Verfahren zum Trichromie-Färben oder -Bedrücken von Materialien aus natürlichen und synthetischem Polyamid, dadurch gekennzeichnet, dass man diese Materialien mit einer Färbeflotte oder Druckpaste behandelt, welche die Farbstoffmischung gemäss Anspruch 1 sowie Wasser und gegebenenfalls weitere Zusätze enthält.

10. Wässrige Färbeflotte oder Druckpaste, dadurch gekennzeichnet, dass sie Wasser, die Farbstoffmischung gemäss Anspruch 1 sowie gegebenenfalls weitere Zusätze enthält.

11. Das nach dem Verfahren gemäss Anspruch 1 bzw. unter Verwendung der Färbeflotte oder Druckpaste gemäss Anspruch 10 gefärbte oder bedruckte Material, insbesondere das Textilmaterial.

12. Das gemäss Anspruch 11 gefärbte oder bedruckte Polyamidmaterial, insbesondere Polyamid-Teppiche.

Europäisches Patentamt

# EUROPÄISCHER RECHERCHENBERICHT

Nummer der Anmeldung

EP 90 81 0790

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| P,Y | EP-A-388353 (CIBA-GEIGY AG)<br>* Seite 9, Zeile 10 - Seite 9, Zeile 20; Ansprüche 1-17 * | 1, 6, 8-12 | D06P3/24<br>D06P3/06<br>C09B67/00 |
| P,X | | 2-5, 7 | |
| D,Y | EP-A-181292 (CIBA-GEIGY AG)<br>* das ganze Dokument * | 1, 6, 8-12 | |
| D,Y | EP-A-127579 (CIBA-GEIGY AG)<br>* Zusammenfassung und Ansprüche * | 1, 6, 8-12 | |
| A | EP-A-92512 (CIBA-GEIGY AG)<br>* Ansprüche * | 1, 6, 8-12 | |
| A | EP-A-83299 (CIBA-GEIGY AG) | | |

RECHERCHIERTE SACHGEBIETE (Int. Cl.5)

D06P3/00
C09B67/00

Der vorliegende Recherchenbericht wurde für alle Patentansprüche erstellt

| Recherchenort | Abschlußdatum der Recherche | Prüfer |
|---|---|---|
| DEN HAAG | 10 DEZEMBER 1990 | DELZANT J-F. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPO FORM 1503 03.82 (P0403)